# EUROPÄISCHE PATENTSCHRIFT

(11) **EP 3 659 001 B1**
(45) Veröffentlichungstag und Bekanntmachung des Hinweises auf die Patenterteilung: **19.04.2023**
(21) Anmeldenummer: 18746697.4
(22) Anmeldetag: 27.07.2018
(51) Int. Cl.: G05D 1/02

(54) **MAGNETOMETER FÜR DIE ROBOTERNAVIGATION**
MAGNETOMETER FOR ROBOT NAVIGATION
MAGNÉTOMÈTRE POUR LA NAVIGATION DE ROBOT

(30) Priorität: 28.07.2017 DE 102017117148
(43) Veröffentlichungstag der Anmeldung: 03.06.2020
(73) Patentinhaber: Robart GmbH, 4020 Linz (AT)
(72) Erfinder: VOGEL, Reinhard, 4020 Linz (AT); ARTES, Harold, 4020 Linz (AT); SEETHALER, Dominik, 4020 Linz (AT); BARTEL, Daniel, 4020 Linz (AT)
(74) Vertreter: Westphal, Mussgnug & Partner, Patentanwälte mbB
(86) Internationale Anmeldenummer: PCT/EP2018/070425
(87) Internationale Veröffentlichungsnummer: WO 2019/020794

(56) Entgegenhaltungen:
- EP-A1- 3 156 873
- AU-A1- 2015 322 263
- DE-A1-102014 012 811
- US-A1- 2016 165 795
- US-A1- 2016 209 217
- US-B2- 7 302 345

## Beschreibung

### TECHNISCHES GEBIET

Die Erfindung betrifft einen autonomen mobilen Roboter wie z.B. einen Serviceroboter für die Bearbeitung einer Oberfläche (z.B. Reinigung von Böden), zur Kommunikation, zum Transport oder zur Überwachung und Inspektion eines Gebiets, insbesondere ein System aus einem autonomen mobilen Roboter und einer Mensch-Maschine-Schnittstelle zur Anzeige von der vom Roboter verwendeten Kartendaten.

### HINERGRUND

In den letzten Jahren finden autonome mobile Roboter, insbesondere Serviceroboter, zunehmend Verbreitung in privaten Haushalten. Mögliche Anwendungen sind beispielsweise Reinigungsrobotern zum Reinigen einer Bodenfläche, Überwachungsroboter, um auf Patrouillenfahrten mögliche Gefahren wie z.B. Einbrecher oder Feuer zu detektieren, Telepräsenz-Roboter, die eine vereinfachte Kommunikation zwischen Menschen über große Entfernungen unabhängig von deren Standort und Tätigkeit ermöglichen, und Assistenzroboter, die beispielsweise Personen beim Transport von Gegenständen behilflich sind.

Hierbei werden zunehmend Systeme eingesetzt, die eine Karte der Umgebung (d.h. des Robotereinsatzgebietes) zur gezielten Navigation mittels eines SLAM-Algorithmus (*Simultaneous Localization and Mapping,* simultane Lokalisierung und Kartenerstellung, siehe z. B. H. Durrant-Whyte, T. Bailey: Simultaneous Localization and Mapping (SLAM): Part I The Essential Algorithms, in: IEEE Robotics and Automation Magazine, Bd. 13, Nr. 2, S. 99-110, Juni 2006) erstellen. Hierbei wird eine Karte und die Position (umfasst im Allgemeinen auch die Orientierung, in diesem Fall oft auch als "Pose" bezeichnet) des Roboters in der Karte mittels verschiedener Sensoren (z.B. Laser-Range-Scanner, Kamera, taktile (Berührungs-) Sensoren, Odometer, Beschleunigungssensoren, etc.) ermittelt.

Die wie erwähnt erstellte Karte kann dauerhaft gespeichert und für nachfolgende Einsätze des Roboters genutzt werden. Durch die (Wieder-) Verwendung gespeicherter Karten kann beispielsweise die Nutzerinteraktion vereinfacht werden, da beispielsweise dem Nutzer ermöglicht wird, den Roboter gezielt zu einem Ort zu schicken, um eine Aufgabe zu verrichten, wie beispielsweise das Wohnzimmer zu reinigen. Zudem kann der Arbeitsablauf des Roboters effizienter gestaltet werden, da der Roboter mit dem "Vorwissen" über sein Einsatzgebiet (d.h. basierend auf den in der Karte gespeicherten Informationen) vorausplanen kann.

Eine wichtige Voraussetzung für die Wiederverwendung einer Karte durch den Roboter ist die Fähigkeit der (globalen) Selbstlokalisierung des Roboters. Hierdurch kann der Roboter seine Pose (d.h. Position inkl. Orientierung) zuverlässig in der Karte (wieder) ermitteln, wenn diese Information beispielsweise nach einem Reset oder einem Umsetzen durch den Nutzer verloren gegangen ist. Hierbei kann es hilfreich sein, wenn der Roboter eine Zusatzinformation über seine Orientierung in dieser Karte besitzt. Beispielsweise in einem exakt quadratischen Raum ist eine eindeutige Bestimmung der Pose des Roboters nur möglich, wenn der Roboter eine Zusatzinformation über seine (ungefähre) Orientierung hat. Auch für einen Nutzer kann es hilfreich sein, wenn ihm zusätzlich zu der für die Roboternavigation notwendigen Karte weitere Informationen angezeigt werden, die ihm die Orientierung in der Karte vereinfachen. Die Erfinder haben es sich daher zur Aufgabe gemacht, einen Roboter zu schaffen, der in der Lage ist, seine Orientierung in Bezug auf eine zuvor erstellte Karte des Robotereinsatzgebietes in einfacher Weise zu bestimmen. Eine weitere Aufgabe besteht in der Verbesserung der Roboternavigation mittels Messungen von Magnetfeldern.

Die Publikation US 7 302 345 B2 offenbart ein Verfahren, mit dem eine Magnetfeldkarte zur Navigation eines autonomen Mobilroboters erzeugt wird. Die Publikation US 2016/165795 A1 offenbart einen Rasenmäherroboter, der dazu ausgebildet ist, Markierungen in einem Gebiet zu detektieren und diese in eine Karte anhand von Referenzpunkten mit bekannten Koordinaten eingetragen.

### ZUSAMMENFASSUNG

Die oben genannte Aufgabe wird durch das Verfahren gemäß Anspruch 1 und durch das System gemäß Anspruch 4 gelöst. Verschiedene Ausführungsbeispiele und Weiterentwicklungen sind Gegenstand der abhängigen Ansprüche. Es werden im Folgenden Verfahren für einen autonomen mobilen Roboter beschrieben. Gemäß einem Ausführungsbeispiel umfasst ein Verfahren folgendes: das Erfassen von Informationen über die Struktur der Umgebung des Roboters im Robotereinsatzgebiet mittels einer ersten Sensoreinheit des Roboters und das Erstellen einer Karte basierend auf den erfassten Informationen. Das Verfahren umfasst weiter das Messen einer Richtung und/oder eines Betrags von zumindest einer physikalischen Vektorfeldgröße für eine oder mehrere Posen des Roboters mittels einer zweiten Sensoreinheit sowie das Ermitteln - basierend auf den für eine oder mehrere Posen des Roboters durchgeführte(n) Messung(en) - einer Vorzugsrichtung der zumindest einen physikalischen Vektorfeldgröße für das Robotereinsatzgebiet (oder eines Teils davon).

Gemäß einem weiteren Ausführungsbeispiel umfasst das Verfahren das Transferieren einer ersten Karte eines Robotereinsatzgebietes auf einen autonomen mobilen Roboter, das Erfassen von Informationen über die Struktur der Umgebung im Robotereinsatzgebiet mittels einer Sensoreinheit des Roboters und das Erstellen einer zweiten Karte des Robotereinsatzgebietes (oder eines Teils davon), anhand der der Roboter in dem Robotereinsatzgebiet navigieren kann, basierend auf den erfassten Informationen über die Struktur der Umgebung und der ersten Karte.

Ein weiteres Ausführungsbeispiel betrifft das Andocken an eine Basisstation. Demnach umfasst das Verfahren das Navigieren des Roboters an eine Position in der Nähe der Basisstation nach Maßgabe einer in einer Karte eingetragenen Position/Pose der Basisstation (z.B. mittels von einer Sensoreinheit detektierten Informationen über eine Struktur der Umgebung des Roboters im Robotereinsatzgebiet) sowie das Detektieren einer aktuellen Pose der Basisstation relativ zum Roboter (z.B. mittels der Sensoreinheit). Das Verfahren umfasst weiter das Planen eines Pfades für ein Andockmanövers an die Basisstation und das Durchführen des Andockmanövers. Dabei wird ein Magnetfeldes, welches von mindestens einem an der Basisstation erzeugten Magneten erzeugt wird, gemessen, wodurch das Andockmanövers basierend auf dem gemessenen Magnetfeld überwacht werden kann.

Des Weiteren wird ein autonomer mobiler Roboter beschrieben. Gemäß einem Ausführungsbeispiel weist der Roboter eine Antriebseinheit zur Bewegung/Navigation des Roboters innerhalb eines Robotereinsatzgebietes auf. Zudem weist der Roboter eine erste Sensoreinheit zur Erfassung von Informationen über die Struktur der Umgebung des Roboters im Robotereinsatzgebiet sowie eine zweite Sensoreinheit zur Messung einer Richtung und/oder eines Betrags von zumindest einer physikalischen Vektorfeldgröße an einer oder mehrerer Posen des Roboters auf. Eine Steuereinheit ist dazu ausgebildet, basierend auf den von der ersten Sensoreinheit gelieferten Informationen über die Struktur der Umgebung im Robotereinsatzgebiet und einer Karte des Robotereinsatzgebietes den Roboter in dem Robotereinsatzgebiet zu bewegen/navigieren, und basierend auf den mit der zweiten Sensoreinheit bei einer oder mehreren Posen des Roboters durchgeführten Messungen der zumindest einen physikalischen Vektorfeldgröße eine Vorzugsrichtung derselben in dem Robotereinsatzgebiet (oder in einem Teil davon) zu ermitteln.

Des Weiteren werden Systeme mit einem autonomen mobilen Roboter und einem weiteren (roboter-) externen elektronischen Gerät beschrieben. Gemäß einem Ausführungsbeispiel weist der Roboter eine Kommunikationseinheit auf und ist dazu ausgebildet, mittels der Kommunikationseinheit mit dem elektronischen Gerät zu kommunizieren. Das elektronische Gerät ist dazu ausgebildet, die Karte des Robotereinsatzgebietes sowie die dieser zugeordneten Vorzugsrichtung vom Roboter zu empfangen.

Des Weiteren werden Systeme mit einem autonomen mobilen Roboter und einer Basisstation beschrieben. Gemäß einem Ausführungsbeispiel ist die Basisstation dazu ausgebildet ist, ein definiertes Magnetfeld zu erzeugen, und der Roboter ist dazu ausgebildet, die Basisstation mit Hilfe zumindest einer ersten Sensoreinheit zu erkennen und basierend hierauf ein Andockmanöver durchzuführen. Der Roboter weist dazu eine zweite Sensoreinheit mit einem Sensor zur Messung des Magnetfeldes auf.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt beispielhaft ein Robotereinsatzgebiet und eine aktuelle Position des Roboters in dem Einsatzgebiet.
Figur 2 ist ein Blockschaltbild, welches schematisch die Funktionseinheiten und Baugruppen eines autonomen mobilen Roboters repräsentiert.
Figur 3 illustriert verschiedene Möglichkeiten der Messung eines externen Magnetfeldes (Erdmagnetfeldes), wobei Störfelder kompensiert werden können.
Figur 4 illustriert die unterschiedliche Ausrichtung einer vom Roboter ermittelten Karte bei unterschiedlichen Ausgangspositionen des Roboters.
Figur 5 illustriert die Ausrichtung einer vom Roboter ermittelten Karte anhand einer vom Roboter ermittelten Vorzugsrichtung des Magnetfeldes in dem Robotereinsatzgebiet.
Figur 6 illustriert die Darstellung einer Roboterkarte auf einer HMI unter Berücksichtigung der vom Roboter für die Karte ermittelten Vorzugsrichtung.
Figur 7 illustriert wie die vom Roboter ermittelte Vorzugsrichtung bei der Selbstlokalisierung mehrdeutige Lösungen vermeidet.
Figur 8 illustriert die Zusammenführung einer Karte einer Wohnung mit einer Roboterkarte.
Figur 9 illustriert den Einfluss der für die Kartenerstellung verwendeten Sensoren auf die vom Roboter ermittelten Karten des Robotereinsatzgebietes.
Figur 10 illustriert die automatisierte Übernahme von Information aus einer Roboterkarte in eine neu erstellte Roboterkarte.
Fig. 11 illustriert eine Basisstation für einen autonomen mobilen Roboter und die Nutzung von Magnetfeldern zum Andocken des Roboters an die Basisstation.
Fig. 12 ist ein Flussdiagram zur Illustration des Vorgehens bei einem Andockmanöver an eine Basisstation, wobei der Andockpfad mit Hilfe von Magnetfeldmessungen korrigiert wird.

### DETAILLIERTE BESCHREIBUNG

Ein autonomer mobiler Roboter kann als Serviceroboter während eines Einsatzes (*deployment*) im Allgemeinen selbsttätig eine oder mehrere Aufgaben (*tasks*) verrichten, wie zum Beispiel die Reinigung oder die Überwachung eines Robotereinsatzgebietes (*robot deployment area*) oder den Transport von Gegenständen innerhalb des Robotereinsatzgebietes. Das Robotereinsatzgebiet kann beispielsweise eine Wohnung, ein Haus oder eine Bürofläche sein. Die im Folgenden beschriebenen Ausführungsbeispiele betreffen zumeist Reinigungsroboter. Jedoch ist die vorliegende Erfindung nicht auf den Einsatz für Reinigungsroboter beschränkt, sondern ist auf alle denkbaren Anwendungen im Zusammenhang mit autonomen mobilen Robotern anwendbar, bei welchen einer oder mehrere autonome mobile Roboter eine oder mehrere Aufgaben in einem definierten Einsatzgebiet durchführen sollen, in welchem sie sich selbstständig mithilfe einer Karte bewegen (z.B. navigieren) können.

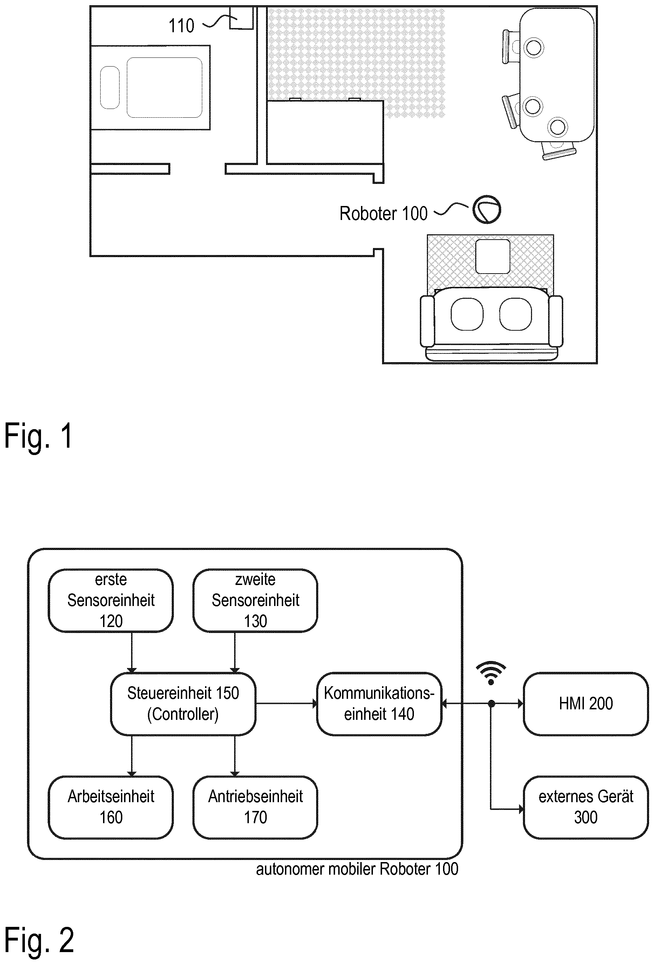

Figur 1 zeigt beispielhaft ein Einsatzgebiet für einen autonomen mobilen Roboter 100 sowie dessen aktuelle Position (inkl. Orientierung) innerhalb des Einsatzgebietes. Das Einsatzgebiet ist beispielsweise eine Wohnung mit mehreren Räumen. Um ein autonomes Arbeiten ohne eine größere Zahl von Interaktionen mit dem Nutzer zu ermöglichen, kann an einer Stelle innerhalb des Einsatzgebietes eine Basisstation 110 vorhanden sein. Zu der Basisstation kann der autonomer mobile Roboter 100 nach Erledigung einer Aufgabe zurückkehren. An der Basisstation kann beispielsweise eine Batterie des autonomen mobilen Roboters 100 aufgeladen werden. Bei Reinigungsrobotern, wie beispielsweise einem Saugroboter, kann an der Basisstation 110 beispielsweise auch der während einer Reinigungsfahrt aufgenommene Schmutz entsorgt werden. Bei Wischrobotern kann an der Basisstation 110 beispielsweise Reinigungsmittel zum Aufbringen auf die Bodenfläche aufgefüllt werden. Dies sind jedoch nur Beispiele. An der Basisstation 110 können grundsätzlich alle Tätigkeiten durchgeführt werden, welche nach oder während eines Einsatzes des autonomen mobilen Roboters 100 erforderlich sind. Der Roboter 100 ist dazu ausgebildet, während eines Einsatzes selbstständig anhand einer Karte des Robotereinsatzgebietes zu navigieren. Abhängig von der Art des Roboters 100 kann dieser auch ohne Basisstation einsetzbar sein.

Figur 2 zeigt beispielhaft an einem Schaltbild die verschiedenen Baueinheiten eines autonomen mobilen Roboters 100. Hierbei kann eine Baueinheit eine eigenständige Baugruppe sein und/oder ein Teil einer Software zur Steuerung des Roboters, der die beschriebene Aufgabe ausführt. Die für das Verhalten des Roboters 100 zuständige Software kann auf der Steuereinheit 150 des Roboters 100 (mittels entsprechendem Prozessor und Speicherelement) ausgeführt werden oder zumindest teilweise auf einen externen Rechner ausgelagert sein, welcher beispielsweise in einem Heimnetzwerk oder über das Internet (Cloud-Server) erreichbar ist.

In den hier beschriebenen Ausführungsbeispielen umfasst der autonome mobile Roboter 100 eine Antriebseinheit 170, welche beispielsweise Elektromotoren, Getriebe und Räder aufweisen kann, wodurch der Roboter 100 - zumindest theoretisch - jeden Punkt seines Einsatzgebiets anfahren kann (sofern der Zugang zu einem Punkt nicht durch ein Hindernis versperrt ist).

Der autonome mobile Roboter 100 umfasst des Weiteren eine Kommunikationseinheit 140, um eine Kommunikationsverbindung zu einer Mensch-Maschine-Schnittstelle (*human-machine interface,* HMI) 200 und/oder anderen externen Geräten 300 herzustellen. Die Kommunikationsverbindung ist beispielsweise eine direkte drahtlose Verbindung (z.B. Bluetooth), eine lokale drahtlose Netzwerkverbindung (z. B. WiFi oder ZigBee) oder eine Internetverbindung (z. B. via Cloud-Service).

Die erwähnte Mensch-Maschine-Schnittstelle 200 kann dazu dienen, Informationen über den autonomen mobilen Roboter 100 an einen Nutzer (*user*) ausgeben (z.B. Batteriestatus, aktueller Arbeitsauftrag, Karteninformationen wie eine Reinigungskarte, etc.) sowie Nutzerkommandos entgegennehmen. Beispielsweise kann ein bestimmtes Nutzerkommando einen Auftrag an den autonomen Roboter darstellen, eine bestimmte Aufgabe in einem bestimmten Gebiet zu verrichten. Beispiele für eine Mensch-Maschine-Schnittstelle 200 sind Tablet-PC, Smartphone, Smartwatch, Computer, Smart-TV, oder Head-Mounted Displays. In einigen Fällen ist eine Mensch-Maschine-Schnittstelle direkt in den Roboter integriert und kann über Tasten und/oder Gesten bedient werden. Alternativ oder zusätzlich kann die Mensch-Maschine-Schnittstelle über Sprachein- und -ausgabe die Steuerung (*control*) und Kontrolle (*monitoring*) des Roboters ermöglichen. Beispiele für externe Geräte 300 sind Computer und Server, auf denen Berechnungen und/oder Daten ausgelagert werden, externe Sensoren, die zusätzliche Informationen liefern, oder andere Haushaltsgeräte (z. B. andere Roboter), mit denen der autonome mobile Roboter 100 zusammenarbeitet und/oder Informationen austauscht.

In den hier beschriebenen Ausführungsbeispielen weist der autonome mobile Roboter 100 eine Steuereinheit 150 auf, die alle Funktionen bereitstellt, die der Roboter benötigt, um sich selbstständig in seinem Einsatzgebiet bewegen und eine Aufgabe zu verrichten. Zumindest Teile der Funktionen der Steuereinheit 150 können mittels Software implementiert sein. Hierzu umfasst die Steuereinheit 150 beispielsweise einen Prozessor und ein Speichermodul, um eine Steuersoftware 151 des Roboters 100 auszuführen. Die Steuereinheit 150 erzeugt basierend auf den Informationen von Sensoren (z.B. Sensoren 120, 130) und basierend auf von der Kommunikationseinheit 140 gelieferten Informationen Steuerkommandos (z.B. Steuersignale) für die Arbeitseinheit 160 und die Antriebseinheit 170. Die Steuersoftware 151 kann Funktionen zur Objekterkennung (z.B. basierend auf Informationen von den Sensoren) und Arbeitsplanung (z.B. basierend auf Informationen die über die Kommunikationseinheit 140 vom Nutzer kommen) umfassen. Damit der Roboter autonom eine Aufgabe verrichten kann, umfasst die Steuersoftware 151 ein Navigationsmodul. Dies ermöglicht dem Roboter, sich in seiner Umgebung beispielsweise anhand von Navigationsfeatures wie beispielsweise Landmarken, welche mit Hilfe des ersten Sensormoduls 120 erfasst werden, zu orientieren und zu navigieren. Das Navigationsmodul arbeitet beispielsweise mit einer Hindernisvermeidungsstrategie, einem SLAM-Algorithmus (*Simutaneous Localization and Mapping,* simultane Lokalisierung und Kartenerstellung) und/oder mit einer oder mehr Karten des Robotereinsatzgebiets. Das Navigationsmodul ist zumindest teilweise als Software implementiert und kann z.B. auf dem erwähnten Prozessor der Steuereinheit 150 ausgeführt werden.

Die Karten des Robotereinsatzgebiets kann der Roboter während eines Einsatzes neu erstellen oder eine zu Beginn des Einsatzes schon vorhandene Karte nutzen. Eine vorhandene Karte kann bei einem vorhergehenden Einsatz (beispielsweise einer Erkundungsfahrt) vom Roboter selbst erstellt worden sein, oder von einem anderen Roboter und/oder einem Nutzer zur Verfügung gestellt werden. Die vorhandene Karte kann beispielsweise in einem Speichermodul dauerhaft (permanent) gespeichert werden, sodass sie bei einem späteren Robotereinsatz wiederverwendet werden kann. Alternativ können die permanent zu speichernden Karten des Robotereinsatzgebiets auch außerhalb des Roboters gespeichert werden, beispielsweise auf einem Computer im Haushalt des Nutzers des Roboters (z.B. Tablet-PC, Home-Server) oder auf einem über das Internet erreichbaren Computer (z.B. Cloud-Server).

In jenen Ausführungsbeispielen, in denen der Roboter eine Tätigkeit wie z.B. das Reinigen einer Bodenfläche durchführen soll, kann der autonome mobile Roboter 100 eine Arbeitseinheit 160 aufweisen. In dem erwähnten Beispiel ist das eine Reinigungseinheit zur Reinigung einer Bodenfläche (z.B. Bürste, Saugvorrichtung, Wischvorrichtung, Nassreinigungsvorrichtung) oder ein Greifarm zum Fassen und Transportieren von Gegenständen. In einigen Fällen wie beispielsweise bei einem Telepräsenz-Roboter oder einem Überwachungsroboter wird eine andere Baugruppe zur Erfüllung der vorgesehenen Aufgaben genutzt und es ist keine Arbeitseinheit 160 notwendig. So kann ein Telepräsenz-Roboter ein mit einer Mensch-Maschine-Schnittstelle 200 gekoppelte Kommunikationseinheit 140 mit einer Multimediaeinheit aufweisen, welche beispielsweise Mikrofon, Kamera und Bildschirm beinhaltet, um die Kommunikation zwischen mehreren räumlich weit entfernten Personen zu ermöglichen. Ein Überwachungsroboter ermittelt auf Kontrollfahrten mit Hilfe seiner Sensoren ungewöhnliche Ereignisse (z. B. Feuer, Licht, unautorisierte Personen, etc.) und informiert beispielsweise eine Kontrollstelle hierüber.

Der autonome mobile Roboter 100 umfasst zahlreiche Sensoren. Insbesondere besitzt er eine erste Sensoreinheit 120 zur Erfassung von Informationen über die (geometrische) Struktur der Umgebung des Roboters, wie beispielsweise die Position von Hindernissen, deren räumliche Ausdehnung oder anderen Navigationsfeatures im Robotereinsatzgebiet. Die erste Sensoreinheit 120 umfasst beispielsweise einen Sensor zur Messung von Abständen zu Objekten in der Umgebung wie beispielsweise einen optischen und/oder akustischen Sensor, der mittels Triangulation oder Laufzeitmessung eines ausgesandten Signals arbeitet (Triangulationssensor, Time-Of-Flight-Kamera, Laserscanner, Ultraschallsensoren). Andere typische Beispiele für geeignete Sensoren sind Kameras und taktile Sensoren. Andere typische Sensoren, die in autonomen mobilen Robotern zum Einsatz kommen sind Sensoren zur Bestimmung der Geschwindigkeit und/oder des zurückgelegten Weges des Roboters wie Hodometer und Drehratensensoren. Die Verwendung dieser Sensoren zur Steuerung eines autonomen mobilen Roboters 100 und insbesondere zur Navigation und Kartenerstellung ist an sich bekannt.

In den hier beschriebenen Ausführungsbeispielen weist der Roboter eine zweite Sensoreinheit 130 zum Messen der Richtung und/oder des Betrags zumindest einer physikalischen Vektorfeldgröße an der Position des Roboters auf. Beispielsweise mit Beschleunigungssensoren kann die Richtung (relativ zum Roboter) und der Betrag des Schwerfelds der Erde bestimmt werden, solange der Roboter in Ruhe ist oder sich gleichförmig bewegt. Magnetische Felder wie insbesondere das Erdmagnetfeld können mit Magnetometern wie beispielsweise Hall-Sensoren bestimmt werden.

Für viele Anwendungen zur Steuerung eines autonomen mobilen Roboters 100 ist es vorteilhaft, eine ungefähre Orientierung bezüglich einer zuvor durch den Roboter 100 aufgenommenen Karte zu kennen. So kann z.B. durch eine geeignete Ausrichtung einer grafischen Anzeige der Kartendaten auf einer Mensch-Maschine-Schnittstelle (z. B. Smartphone, Tablet-PC) einem Nutzer beim Betrachten der Karte die Orientierung erleichtert werden. Eine weitere Anwendung ist die (globale) Selbstlokalisierung, bei der die Position (und Orientierung) des Roboters ohne (oder mit nur beschränktem) Vorwissen in einer zuvor aufgenommenen Karte bestimmt wird, beispielsweise indem aktuelle Sensordaten mit den Kartendaten abgeglichen werden. Eine dritte Anwendung ist die Auswertung von Karteninformationen, die dem Roboter vorgegeben werden. Wenn hierbei ohne großen Aufwand die ungefähre Orientierung des Roboters in Bezug auf die Karte (oder die Umgebung) bestimmt werden kann, so kann dieser Freiheitsgrad (d.h. die Orientierung des Roboters in Bezug auf die Karte) in einem möglichen Lösungsraum eingeschränkt werden. Hierdurch kann der Rechenaufwand bei der globalen Selbstlokalisierung reduziert werden.

Der Begriff "ungefähre Orientierung" bezeichnet dabei einen Messwert für die Orientierung, der mit einem größeren (Mess-) Fehler (z.B. von bis zu ± 5°, 10°, 25°) behaftet sein kann. Die Genauigkeit der "ungefähren Orientierung" kann also deutlich schlechter sein als beispielsweise jene Genauigkeit, mit der der Roboter seine tatsächliche Orientierung bestimmen muss, um einwandfrei navigieren oder (z.B. mittels SLAM) Karten erstellen zu können.

Autonome mobile Roboter 100, die sich in ihrer Umgebung bewegen und mit Hilfe von Sensoren und in einer Karte gespeicherten Kartendaten orientieren, sind an sich bekannt. Für Roboter im Freilandeinsatz wie beispielsweise Mähroboter oder andere selbstfahrende Landmaschinen können Magnetometer zur Messung des Erdmagnetfelds genutzt werden, um eine feste Orientierung im Raum zu bestimmen. Diese wird beispielsweise genutzt, um gerade und parallele Bearbeitungsbahnen (z.B. beim Mähen eines Rasens) zu gewährleisten.

Innerhalb von Gebäuden ist eine Messung des Erdmagnetfeldes in der Regel nicht mit ausreichender Genauigkeit möglich, da insbesondere eisenhaltige bauliche Strukturen (z.B. Stahlbeton) als auch elektrische Ströme zu magnetischen Störfeldern führen, die das natürliche Erdmagnetfeld deutlich überlagern. Diese Störfelder sind so stark und charakteristisch, dass die Änderung des Magnetfeldes zum Kartenaufbau und zur Orientierung des Roboters in SLAM-Verfahren (Vector-Field-SLAM) genutzt werden könnten. In einer Wohnumgebung ist dieses Verfahren jedoch ungeeignet, um eine dauerhafte Karte zur Orientierung des Roboters zu erstellen, da die magnetischen Störfelder leicht durch das Verhalten der Bewohner geändert werden, beispielsweise durch (De-)Aktiveren eines elektrischen Geräts oder Verschieben eines Stuhls mit Metallbeinen oder anderen metallischen Gegenständen, etc.

Aus obigen Gründen wird allgemein angenommen, dass die Messung eines Magnetfelds (insbesondere des Erdmagnetfelds) in einer Wohnumgebung keine wertvolle Information zur Steuerung eines autonomen mobilen Roboters bietet. Die einzige an sich bekannte Anwendung von Magnetfeldern zur Robotersteuerung in einer Wohnumgebung ist als externe Markierung. Beispielsweise können magnetische Streifen auf einer Bodenfläche ausgelegt oder aufgeklebt werden, um so eine Grenze zu markieren, die der Roboter nicht überfahren darf.

In den hier beschriebenen Ausführungsbeispielen wird die Vorzugsrichtung einer physikalischen Vektorfeldgröße wie z.B. des Magnetfeldes innerhalb eines von einer Karte repräsentierten Gebietes bestimmt, um hiermit die herkömmliche Navigation eines autonomen mobilen Roboters mit einem Navigationssensoren (z.B. enthalten in Sensoreinheit 120 wie z.B. Sensor zur Abstandsmessung oder Kamera) zu ergänzen und so zu vereinfachen. Diese Vorzugsrichtung entspricht beispielsweise einer zu erwartenden Orientierung des Magnetfeldes im Raum, welches in der Regel in erster Linie von dem Erdmagnetfeld bestimmt wird, das jedoch von Störfeldern überlagert sein kann. Hierbei wird nicht eine lokale Messung genutzt, da diese aufgrund der zuvor beschriebenen Störfelder nicht repräsentativ ist. Vielmehr wird die Vektorfeldgröße beispielsweise an mehreren Positionen und/oder Orientierungen (Posen) des Roboters im Einsatzgebiet bestimmt. Aus diesen Einzelmesswerten kann ein für das Einsatzgebiet repräsentativer und leicht reproduzierbarer Wert für die Vorzugsrichtung bestimmt werden. Beispielsweise kann aus der Menge der Einzelmesswerte durch statistische Auswertung (z.B. Berechnung des Modalwertes, des Medians oder des Mittelwertes, etc.) der Wert für die Vorzugsrichtung bestimmt werden.

Die Messung des Magnetfeldes kann in allen drei Raumrichtungen (d.h. in drei Dimensionen) erfolgen. Um eine Vorzugsrichtung für das Magnetfeld in einem Robotereinsatzgebiet (und einer hierzu gehörigen Karte) zu ermitteln, können die dreidimensionalen Messwerte genutzt werden oder die Messwerte in eine zur Bodenfläche parallele Ebene projiziert werden. Alternativ kann auch ein Sensor verwendet werden, der nur die Magnetfeldstärke in ein oder zwei zur Bodenfläche parallel verlaufenden Dimensionen erfasst. Hierbei wird im Wesentlichen die Nord-Süd-Ausrichtung des Magnetfelds bestimmt. Es sei angemerkt, dass durch Drehen (Änderung der Orientierung) eines Roboters mit einem Sensor, der die Komponente des Magnetfelds in nur eine Richtung erfasst (z. B. Hall-Sensor), die Erfassung des Magnetfeldes in zwei Raumrichtungen erfolgt (vor und nach der Drehung). Durch einen weiteren Sensor zur Messung der dritten Raumrichtung kann so das dreidimensionale Magnetfeld erfasst werden.

Wie zuvor bemerkt, ist das zu messende Magnetfeld in einem Robotereinsatzgebietes (insbesondere innerhalb von Gebäuden wie z.B. einer Wohnumgebung) nicht konstant. Deshalb wird gemäß den hier beschriebenen Ausführungsbeispielen das Magnetfeld an verschiedenen Positionen und Orientierungen des Roboters 100 gemessen, um basierend auf dieser Vielzahl an Messwerten eine Vorzugsrichtung zu bestimmen. Hierzu wird im einfachsten Fall ein Mittelwert (z. B. arithmetisch) gebildet. Vorzugsweise werden die Messwerte des Magnetfeldes zur Bestimmung der Vorzugsrichtung abhängig von Position und Orientierung des Roboters nach vorgebbaren Regeln ausgewählt und/oder gewichtet. Störungen des Magnetfeldes in Wohnumgebungen können beispielsweise durch Hindernisse wie Möbelstücke oder Wände (z.B. aufgrund der darin verlaufenden Elektroinstallation oder eisenhaltiger Bauteile) verursacht werden. Deshalb können beispielsweise zur Bestimmung der Vorzugsrichtung jene (oder nur jene) Messwerte ausgewählt werden, die in einem vorgebbaren (Mindest-) Abstand von einem Hindernis bestimmt werden.

Zudem kann bestimmt werden, wie stark die Messwerte räumlich schwanken. So deutet ein in alle Richtungen konstantes Messsignal auf ein ungestörtes Magnetfeld hin, wohingegen ein sich räumlich änderndes Magnetfeld durch Störfelder verursacht wird. Folglich werden vorzugsweise räumlich konstante Messsignale zur Bestimmung der Vorzugsrichtung genutzt. Hierzu wird beispielsweise beim Herumfahren des Roboters das Magnetfeld an zwei Positionen mit einem vorgebbaren Abstand (z.B. 1 cm, 5 cm) gemessen und die beiden Messwerte miteinander verglichen. Bei stark voneinander abweichenden Messwerten können diese Messwerte für die Berechnung der Vorzugsrichtung ignoriert werden. Statistische Ausreißer können ignoriert werden. Insbesondere kann der Betrag und die dreidimensionale Orientierung des Magnetfeldes berücksichtigt werden, um Störungen zu identifizieren. So besitzt das Erdmagnetfeld abhängig von der geografischen Position eine charakteristische Stärke und Orientierung bezüglich der Erdanziehungskraft. Zusätzlich kann auch ein sich zeitlich änderndes Magnetfeld auf eine externe Störung hindeuten. Basierend auf den an verschiedenen Positionen (und bei verschiedenen Orientierungen) des Roboters durchgeführten Magnetfeldmessungen kann der Roboter z.B. eine Magnetfeldkarte erstellen. Diese kann z.B. eine Grid-Karte sein, in der für jedes Element des Grids ein oder mehrere Messwerte gespeichert sind. Alternativ können auch die Messwerte zusammen mit den dazugehörigen Posen (Position und Orientierung) des Roboters als Repräsentant für die Magnetfeldkarte abgespeichert werden.

Zusätzlich zu der ermittelten Vorzugsrichtung können Maße für deren Genauigkeit bestimmt werden. Zusätzlich kann ermittelt werden, welche Strecke und/oder Fläche der Roboter befahren muss, um diese Genauigkeit zu erreichen. Das einfachste Maß für die Genauigkeit der Vorzugsrichtung ist die Standardabweichung der Vorzugsrichtung basierend auf den bereits erfassten Messstellen. Eine weitere Möglichkeit ist den Flächenanteil an der gesamten für den Roboter 100 zugänglichen Fläche zu bestimmen, in welchem die Richtung des messbare Magnetfeldes der (zuvor ermittelten) Vorzugsrichtung mit einer vorgebbaren Genauigkeit (z. B. ±5°, ±10°, ±25°, etc.) entspricht. Die Vorzugsrichtung kann wie erwähnt durch statistische Auswertung der Einzelmesswerte ermittelt werden, beispielsweise durch Mittelwertbildung.

Gemäß einem weiteren Ansatz ermittelt der Roboter laufend an unterschiedlichen Positionen Messwerte für das Magnetfeld, während er sich im Robotereinsatzgebiet fortbewegt. Nach Erhalt eines neuen Messwertes kann die Vorzugsrichtung aktualisiert werden. Beispielsweise wird mit jeder zusätzlichen Messung der Mittelwert über alle Messwerte als Schätzwert für den wahren Wert genauer. Die Varianz des Mittelwertes wird kleiner. Nun kann auch die Wegstrecke, die ein Roboter zurücklegt, bis er die Vorzugsrichtung mit einer gewünschten Genauigkeit ermittelt hat, als Maß für die Genauigkeit herangezogen werden. Wenn die Messungen zu einem späteren Zeitpunkt wiederholt werden, "weiß" der Roboter bereits, wie weit er sich während des Messens bewegen muss, um eine gewünschte Genauigkeit zu erreichen. Der Roboter kann dazu eingerichtet sein, festzustellen, dass die Störfelder so stark und inhomogen sind, dass keine Vorzugsrichtung bestimmt werden kann.

Der Roboter kann dazu eingerichtet sein, sein Einsatzgebiet in mehrere Teilgebiete zu unterteilen, und für jedes der Teilgebiete eine separate Vorzugsrichtung zu bestimmen. Die Teilgebiete können beispielsweise Räume einer Wohnung oder Teile hiervon sein. Alternativ oder zusätzlich können die Teilgebiete eine feste Fläche vorgebbarer Größe sein.

Neben den externen Störfeldern gibt es interne Störfelder, die durch den Roboter 100 selbst verursacht werden. Diese können beispielsweise durch Kalibrierung bestimmt und kompensiert werden. Eine erste Quelle von internen Störfeldern sind Magnetfelder, die im Roboter verursacht werden, wie beispielsweise bei der Aktivität von Elektromotoren auftretende oder von im Roboter befindlichen Permanentmagneten verursachte Magnetfelder. Diese liefern einen konstanten sich mit dem Roboter mit bewegenden (und drehenden) Beitrag zum gemessen Magnetfeld (*hard iron distortions*)*.* Die konstanten magnetischen Störfelder werden hierbei durch einen (roboterfesten) Versatz (Offset) kompensiert, der gegebenenfalls von der Aktivität des Roboters und insbesondere der verwendeten elektrischen Ströme einzelner Aktoren (z.B. Motoren der Antriebseinheit oder der Arbeitseinheit) abhängig ist.

Eine zweite Quelle von Störungen sind magnetisierbare (ferromagnetische) Bauteile des Roboters, die zu einer Verzerrung des externen Magnetfeldes führen, die abhängig von der Orientierung des Roboters ist (*soft iron distortions*)*.* Diese kann durch eine lineare Abbildung (Transformationsmatrix) kompensiert werden, die bezüglich einem roboterfesten Koordinatensystem konstant ist. Diese kann beispielsweise bestimmt werden, indem ein konstantes externes Magnetfeld vom Roboter in verschiedenen Orientierungen des Roboters gemessen wird. Eine derartige Kompensation (Kalibrierung des Magnetfeldsensors) ist an sich bekannt und wird z.B. in elektronischen Kompassen eingesetzt. Würde sich der Roboter z.B. an einer festen Position um die eigene Hochachse rotieren, "sähe" der Roboter (im roboterfesten Koordinatensystem) ein entlang eines Kreises rotierenden Magnetfeldvektor. Aufgrund von Störungen ist dieser Kreis tatsächlich jedoch eine Ellipse. Die Erwähnte Transformationsmatrix bildet die Ellipse auf den Kreis ab, wodurch die Störung kompensiert wird.

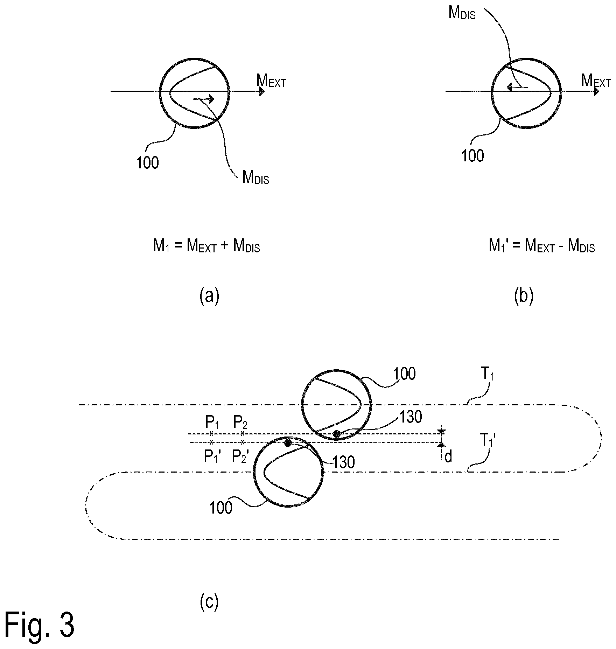

Eine Möglichkeit, die durch die Aktivität des Roboters (erste Quelle) verursachten magnetischen Störfelder zu kompensieren, ist die Messung des Magnetfeldes an einer festen Position mit entgegengesetzter Orientierung. Hierzu kann der Roboter sich beispielsweise auf einer Stelle drehen. Der Mittelwert beider Messungen (im globalen Koordinatensystem der Karte des Roboters) ergibt eine Messung des externen Magnetfelds M_{EXT} (z.B. das Erdmagentfeld), welche unabhängig von dem durch den Roboter verursachten (Stör-) Magnetfeld M_{DIS} ist. Diese Situation ist in den Diagrammen (a) und (b) der Fig. 3 dargestellt. In dem in Diagramm (a) dargestellten Fall "sieht" der Roboter 100 das Magnetfeld M₁=M_{EXT}+M_{DIS}. Bei einer Drehung um 180° dreht sich das vom Roboter selbst verursachte Störfeld M_{DIS} mit dem Roboter 100 mit, wohingegen das externe Magnetfeld M_{EXT} konstant bleibt (siehe Fig. 3, Diagramm (b)). In diesem Fall sieht der Roboter 100 das Magnetfeld M₁^{'}=M_{EXT}-M_{DIS}. Der Mittelwert (Mi+Mi')/2 entspricht genau dem externen Feld M_{EXT}. Die zweite Dimension in der Bewegungsebene des Roboters ergibt sich für den Fachmann analog. Die auf der Bewegungsebene senkrecht stehende dritte Dimension kann ignoriert werden. Alternativ oder zusätzlich kann eine vollständige Kalibrierung während der Produktion des Roboters erfolgen.

Eine weitere Möglichkeit ergibt sich aus der Aktivität des Roboters. Beispielsweise Reinigungsroboter reinigen eine Bodenfläche beispielsweise in parallelen aneinander grenzenden (oder leicht überlappenden) Bahnen. Diese Situation ist in Diagramm (c) der Fig. 3 dargestellt. Hierbei werden zwei direkt benachbarte parallele Bahnen T₁, T₁' in entgegengesetzter Orientierung abgefahren. Die Kombination von Messungen an zumindest zwei Positionen P₁ und P₁', P₂ und P₂', etc., mit möglichst geringem Abstand d kann so als Annäherung an eine Messung an einem festen Punkt mit entgegengesetzter Orientierung genutzt werden. Hierbei kann darauf geachtet werden, dass der Abstand der beiden Messpositionen einen vorgebbaren Maximalwert (z. B. 15 cm, 10 cm oder 5 cm) nicht überschreitet. Wenn der Magnetometer mittig zu einer Reinigungsbahn angebracht ist, so entspricht der übliche Abstand zweier Messpositionen mit entgegengesetzter Orientierung in etwa der Breite einer Reinigungsbahn (z. B. 15 cm oder 20 cm). Wenn der Magnetometer 130 wie in Diagramm c der Fig. 3 dargestellt zu einer Seite der Reinigungsbahn verschoben angebracht ist, so kann der Abstand d zweier Messpositionen mit entgegengesetzter Orientierung reduziert werden.

*Anzeige einer Karte basierend auf deren Vorzugsrichtung* - In einer bevorzugten Ausgestaltung der Erfindung ist der autonome mobile Roboter 100 dazu eingerichtet eine Kommunikationsverbindung zu einem weiteren elektronischen Gerät wie z.B. einer Mensch-Maschine-Schnittstelle (HMI, z. B. Tablet-PC) oder einem anderen Roboter aufzubauen. So können elektronische Karten, welche mindestens ein Robotereinsatzgebiet repräsentieren und die zumindest eine für ein Robotereinsatzgebiet ermittelte Vorzugsrichtung an das andere Gerät übermittelt werden.

Eine HMI kann einem Nutzer die Kartendaten in einer grafisch aufbereiteten Form anzeigen und basierend auf der aufbereiteten Karte eine Nutzereingabe entgegennehmen. Beispielsweise können auf einem Tablet-PC mit einem berührungsempfindlichen Bildschirm (Touchscreen) die Kartendaten in Form eines Grundrisses des Robotereinsatzgebiets wie z.B. einer Wohnung dargestellt werden. Der Nutzer kann dem Roboter eine Anweisung wie beispielsweise die Reinigung eines bestimmten Bereichs geben, beispielsweise indem er diesen innerhalb des Grundrisses markiert.

Eine durch einen Roboter automatisch generierte Karte ist jedoch häufig schwer für einen Nutzer interpretierbar, da der Nutzer in der Regel die vom Roboter ermittelten Orientierungspunkte nicht immer direkt realen Objekten (z.B. Wände, Türen, Möbel, etc.) in dem Robotereinsatzgebiet zuordnen kann. Beispielsweise können aus "Sicht" des Roboters ein Schrank und eine Couch als große rechteckige Hindernisse vor einer Wand erscheinen und entsprechend in einer Karte dargestellt werden. Aus Sicht eines Nutzers handelt es sich aber um zwei sehr unterschiedliche Objekte. Darüber hinaus gibt es Hindernisse wie ein im Raum stehender Tisch, die für den Nutzer relevant sind, da er sie umrunden muss, während für den Roboter bis auf die vergleichsweise kleinen Tischbeine kein Hindernis vorhanden ist. Es ist deshalb notwendig einen unmittelbaren Zusammenhang zwischen der Darstellung der Kartendaten und der realen Umgebung herzustellen.

Eine Situation, in der einem Nutzer die Interpretation der Darstellung der Kartendaten erleichtert werden soll, ist z.B. nach einer neuen Erstellung der Karte durch den Roboter. Beispielsweise kann basierend auf Kartendaten, die der Roboter während einer Lernfahrt aufgenommen hat, eine automatische Raumerkennung durchgeführt werden. Diese ist jedoch nicht immer zuverlässig, sodass die Raumaufteilung der Kartendaten vom Nutzer nachbearbeitet werden muss, wofür ein gutes Verständnis der dargestellten Kartendaten notwendig ist. Um dies zu erreichen, kann sowohl die Ausgabe der Kartendaten als auch die Interpretation der Eingabe von Nutzeranweisungen basierend auf der vom Roboter bestimmten Vorzugsrichtung erfolgen.

Bei derzeit handelsüblichen Reinigungsrobotern werden die Kartendaten des Roboters bei jedem Einsatz des Roboters neu vom Roboter mittels seiner Sensoren neu erstellt. Die Ausrichtung der grafischen Darstellung der Kartendaten kann hierdurch bei jedem Einsatz anders sein, wodurch es einem Nutzer schwer fallen kann, sich in dieser Karte zu orientieren. Dies kann beispielsweise dadurch vereinfacht werden, indem die Vorzugsrichtung basierend auf dem Magnetfeld bestimmt wird, und die grafische Darstellung der Kartendaten genordet angezeigt wird. Hierdurch ist die Ausrichtung der Darstellung der Kartendaten bei jedem Einsatz des Roboters gleich.

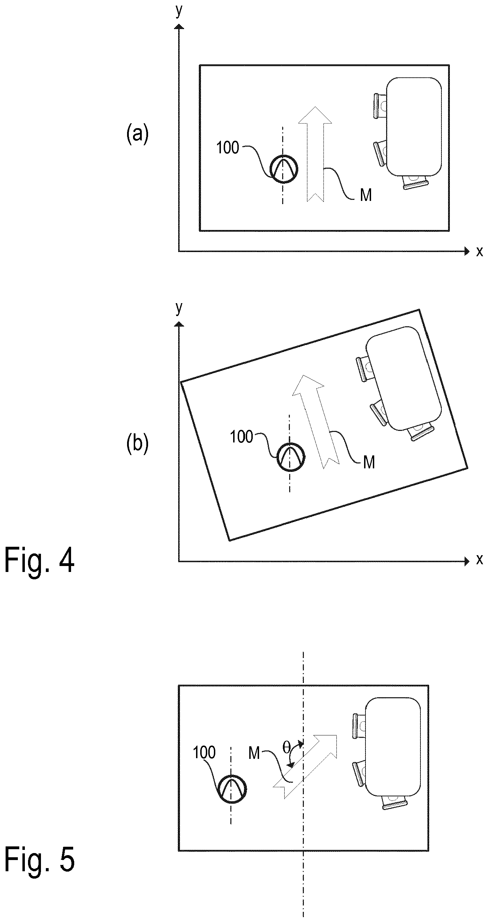

Dieses Problem ist in Fig. 4 dargestellt. Am Beginn der Kartenerstellung hat der Roboter noch kein "globales" Orientierungsmerkmal" (wie z.B. das Wissen, dass das Zimmer nach Süden ausgerichtet ist), mit dessen Hilfe er die Karte in klar definierter Weise ausrichten kann. Die Orientierung des Roboters 100 relativ zu dem Robotereinsatzgebiet (z.B. ein Zimmer eines Hauses) ist somit am Anfang des Robotereinsatzes nicht immer klar definiert und kann daher beliebig gewählt werden. Im vorliegenden Beispiel wird - ohne Beschränkung der Allgemeinheit - angenommen, dass der Roboter mit einer Orientierung parallel zu einer y-Richtung startet. Das heißt, die Anfangsposition des Roboters und insbesondere dessen Orientierung(Anfangspose) kann das globale, ortsfeste Koordinatensystem zur Beschreibung der Kartendaten festlegen. In dem Beispiel aus Diagramm (a) der Fig. 3 startet der Roboter beispielsweise mit einer Orientierung parallel zu einer Wand, und in der vom Roboter ermittelten Karte ist dann eine Wand parallel zur y-Richtung. In dem Beispiel aus Diagramm (b) der Fig. 4 startet der Roboter mit einer geringfügig anderen Orientierung, und die vom Roboter ermittelte Karte ist dementsprechend verdreht im Vergleich zu der Situation in Diagramm (a). Der mit M bezeichnete Pfeil repräsentiert die vom Roboter für das Robotereinsatzgebiet ermittelbare Vorzugsrichtung des Magnetfeldes. Mit der Vorzugsrichtung M gibt es ein globales Orientierungsmerkmal, welches bei jedem Robotereinsatz, bei dem eine Karte neu erstellt wird, (annähernd) gleich ist, und mit dessen Hilfe die Karte ausrichtet werden kann. Dies wird beispielsweise für die Bestimmung der Darstellung der Karte auf einem HMI berücksichtigt. So kann beispielsweise die Karte immer genordet angezeigt werden. Beispielsweise kann so die Karte unabhängig von der Anfangspose des Roboters immer wie in Diagramm (a) der Fig. 4 dargestellt werden. Es sei angemerkt, dass die Aufbereitung der Kartendaten des Roboters zur Darstellung auf einem HMI auf dem Roboter, auf dem HMI, auf einem Server oder beliebigen anderen Computer oder einer Kombination dieser durchgenommen werden kann. Insbesondere kann die Vorzugsrichtung zusammen mit zur Darstellung vorgesehenen Kartendaten (insbesondere als Teil der Karte) vom Roboter an das HMI oder ein anderes externes Gerät über die Kommunikationsschnittstelle gesandt werden.

Zusätzlich kann es möglich sein, dass der Nutzer die Ausrichtung der grafischen Darstellung der Kartendaten selber beeinflussen kann. Hierbei kann das HMI (vgl. Fig. 2, HMI 200) die vom Nutzer gewählte Ausrichtung bezüglich der ermittelten Vorzugsrichtung abspeichern. Wenn in einem weiteren Einsatz des Roboters neue Kartendaten zusammen mit einer Vorzugsrichtung an die HMI gesendet werden, so kann die Ausrichtung der grafischen Darstellung der Kartendaten basierend auf der abgespeicherten Ausrichtung bezüglich der Vorzugsrichtung geschehen. Hierdurch ist es möglich die Ausrichtung der grafischen Darstellung der Kartendaten immer entsprechend der Präferenz des Nutzers zu wählen, wodurch der Nutzer sich einfacher in der angezeigten Karte zurechtfindet, auch wenn diese durch den Roboter in jedem Einsatz neu erstellt wird. Beispielsweise könnte der Nutzer (z.B. für ein bestimmtes Robotereinsatzgebiet) einen Winkel θ definieren, der die gewünschte Winkellage der Karte relativ zur vom Roboter ermittelten Vorzugsrichtung M repräsentiert. Diese Situation ist in Fig. 5 dargestellt. Angenommen die Vorzugsrichtung M zeigt genau nach Süden und das Robotereinsatzgebiet ist tatsächlich in Süd-Ost-Richtung ausgerichtet, dann kann ein Winkel θ von 135° definiert werden, und die vom Roboter 100 ermittelte Karte wird zumindest zum Zweck der Darstellung auf der HMI 200 immer um diesen Winkel relativ zu der ermittelten Vorzugsrichtung M gedreht. In dem vorliegenden Beispiel wäre dann in der Darstellung auf der HMI 200 die Süd-Ost-Wand des Zimmers in der Kartendarstellung immer oben. Für die hier beschriebenen Beispiele kann die vom Roboter ermittelte Vorzugsrichtung als Eigenschaft/Attribut des Robotereinsatzgebietes oder eines Teilgebietes davon betrachtet werden. Das Speichern des Winkels θ und/oder auch die Ausrichtung der Karte relativ zum Display der HMI 200 kann sowohl von der HMI 200 als auch vom Roboter 100 aus erfolgen.

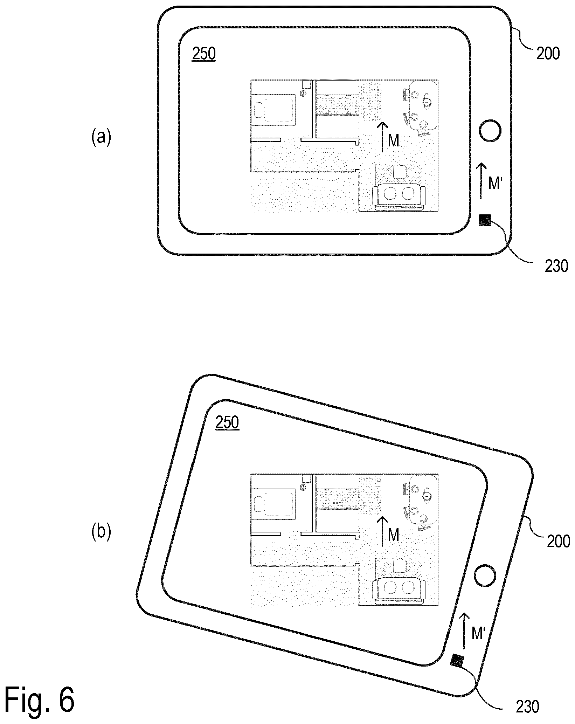

Die Verständlichkeit der grafischen Darstellung der Kartendaten kann weiter erhöht werden, wenn sie entsprechend der realen Umgebung ausgerichtet dargestellt werden kann. Diese Situation ist in Fig. 6 dargestellt. Zu diesem Zweck kann ein externes elektronisches Gerät (vgl. Fig. 2, Gerät 300 oder HMI 200, z.B. ein Tablet-PC), welches die Kartendaten und die zugehörige vom Roboter 100 ermittelte Vorzugsrichtung M vom Roboter 100 empfängt, ebenfalls dazu eingerichtet sein, die Vorzugsrichtung M' zu bestimmen. Hierzu kann es geeignete Sensoren wie z.B. einen Magnetometer, aufweisen, um die physikalische Vektorfeldgröße (z.B. dessen Richtung) zu messen, auf deren Basis auch der Roboter die Vorzugsrichtung bestimmt hat. In dem in Fig. 6 dargestellten Beispiel weist die HMI 200 eine Sensoreinheit 230 auf, die unter anderem einen Magnetfeldsensor enthält. Zusätzlich kann das elektronische Gerät (z.B. HMI 200) Sensoren besitzen, um seine Position oder eine Lageänderung zu bestimmen.

Das HMI 200 kann beispielsweise ein Gyroskop und ein Beschleunigungsmesser aufweisen, welche beispielsweise ebenfalls in der Sensoreinheit 230 enthalten sein können. Die Messwerte dieser Sensoren können genutzt werden, um den Magnetometer zu kalibrieren. Beispielsweise kann eine Lageänderung (Verschiebung und/oder Rotation) der HMI 200 einerseits dadurch bestimmt werden, dass sich die Orientierung des (von der HMI 200 gesehen) Magnetfeldes relativ zur HMI 200 ändert, und andererseits dadurch, dass das Gyroskop eine Drehung misst. Die Messwerte beider Sensoren (Gyroskop und Magnetometer) können kombiniert werden, beispielsweise zur Plausibilitätsprüfung der Magnetfeldmessungen oder zur Kalibrierung des Magnetometers.

Beispielsweise weist das elektronischen Gerät ein HMI (z. B. Tablet, Smartphone, vgl. Fig. 2, HMI 200) mit einem Bildschirm 250 zur grafischen Darstellung der Kartendaten auf. Dann ist es möglich, die Ausrichtung der grafischen Darstellung so zu wählen, dass die vom Roboter bezüglich den Kartendaten bestimmte Vorzugsrichtung M in die von der HMI (separat) bestimmten Vorzugsrichtung M' zeigt. Hierdurch würde beispielsweise ein Grundriss des Robotereinsatzgebiets (z. B. Wohnung) so ausgerichtet, dass er mit der realen Wohnung übereinstimmt. Zudem kann die Darstellung gedreht werden, wenn die HMI gedreht wird, so dass die Ausrichtung der Darstellung relativ zu der realen Umgebung erhalten bleibt. Die notwendigen Korrekturen (Drehung) der Darstellung der Kartendaten kann basierend auf den Messungen des Magnetfelds und/oder auf Messungen der Drehrate während der Drehung des HMI bestimmt werden. Diese Situation ist in den Diagrammen (a) und (b) der Fig. 6 dargestellt. In Diagramm (b) ist die HMI 200 im Vergleich zum Diagramm (a) gedreht worden. Aufgrund der Messung der Vorzugsrichtung M' kann die HMI 200 die Darstellung der Roboterkarte so anpassen, dass diese korrekt an der Vorzugsrichtung M' ausgerichtet bleibt. Die Kartendarstellung steht demnach still auch wenn die HMI 200 gedreht wird.

Zusätzlich können räumliche Änderungen des Magnetfeldes basierend auf einer von dem HMI 200 z.B. mittels des Gyrosensors erkannten Bewegung des elektronischen Geräts erfasst und zur Bestimmung der Vorzugsrichtung benutzt werden. Beispielsweise ist das externe Gerät ein Smartphone oder Tablet-PC und besitzt ein Gyroskop und einen Beschleunigungsmesser mit denen eine Bewegung des Smartphones bzw. des Tablet-PCs ermittelt werden kann. Eine Verdrehung des Smartphones bzw. des Tablet-PCs und die damit veränderte Ausrichtung des Smartphones bzw. des Tablet-PCs in Bezug auf die Vorzugsrichtung können neben dem Magnetometer auch mit dem Gyroskop bzw. dem Beschleunigungssensor gemessen werden. Des Weiteren kann zur Bestimmung der Vorzugsrichtung ein geeigneter (räumlicher) Mittelwert genutzt werden. Alternativ oder zusätzlich kann eine Auswahl der zu berücksichtigenden Messwerte vorgenommen werden. Beispielsweise kann festgestellt werden, ob das gemessene Magnetfeld räumlich konstant oder stark variierend ist, wobei räumlich konstante Werte bevorzugt würden. Alternativ oder zusätzlich können die Messwerte mit einem Referenzwert verglichen werden und nur, wenn sie mit einer vorgebbaren Genauigkeit mit der Referenz übereinstimmen, berücksichtigt werden. Die Referenz kann das Erdmagnetfeld oder ein vom Roboter als Referenz bestimmter Wert sein. Beim Vergleich kann der Betrag des gemessenen Magnetfeldes als auch der Winkel zwischen der Richtung des Magnetfelds und der Erdanziehungskraft berücksichtigt werden Ein Referenzwert kann beispielsweise vom Roboter bei einer speziellen Erkundungsfahrt bei der ersten Inbetriebnahme gemessen werden.

Durch eine Nutzereingabe ist es möglich, zwischen der Darstellung der Kartendaten mit einer festen Orientierung und einer Darstellung, bei der sich die Orientierung basierend auf der Drehung des HMI ändert, zu wechseln. Im Falle von dreidimensionalen Karten kann die zumindest eine Vorzugsrichtung basierend auf der Richtung der Erdanziehungskraft bestimmt werden. Hierdurch ist es möglich die Darstellung der Kartendaten entsprechend der Ausrichtung der Erdanziehungskraft darzustellen. Beispielsweise wird eine einem Grundriss vergleichbare Darstellung der dreidimensionalen Kartendaten gezeigt, wenn das HMI (insbesondere deren Bildschirm) im Wesentlichen horizontal (parallel zur Erdoberfläche) mit Anzeigerichtung nach oben angeordnet ist (d. h. Normalenvektor des Bildschirms ist im Wesentlichen antiparallel zur Erdanziehungskraft). Bei einer Neigung des HMI kann eine perspektivische Darstellung der dreidimensionalen Kartendaten gewählt werden, die basierend auf dem Neigungswinkel des HMI zur Erdanziehungskraft bestimmt wird (e. g. Winkel zwischen Normalenvektor des Bildschirms und Erdanziehungskraft).

Bei der Nutzung von dreidimensionalen Kartendaten können zwei (linear unabhängige) Vorzugsrichtungen wie die Richtung der Erdanziehungskraft (Schwerefeld der Erde) und das Erdmagnetfeld genutzt werden. Hierdurch kann ein äußeres (vom Roboter unabhängiges) Koordinatensystem festgelegt werden, welches leicht zu bestimmen ist.

Es sei angemerkt, dass bei einer Bestimmung der Vorzugsrichtung basierend auf Magnetfeldmessungen in einem HMI und in einem Roboter die besten Ergebnisse bezüglich der Vergleichbarkeit der beiden Vorzugsrichtungen erreicht werden, wenn die Messungen in etwa auf gleicher Höhe durchgeführt werden. Dies wird erreicht, wenn bei hinreichend hohen Robotern (z. B. Telepräsenz- Roboter) der Magnetometer in einer Höhe von etwa 1m bis 1,5m verbaut ist. Bei Reinigungsrobotern ist dies in der Regel nicht möglich, da diese mit Bauhöhen von um die 10 cm so gebaut sind, dass sie unter Möbelstücken reinigen können. Meist ist die hierbei erreichte Genauigkeit der Bestimmung der Vorzugsrichtung jedoch ausreichend.

*Vereinfachte Selbstlokalisierung* - Eine wesentliche Voraussetzung für die dauerhafte Nutzung von Kartendaten des Robotereinsatzgebiets durch den autonomen mobilen Roboter ist die Fähigkeit des Roboters ohne (oder mit nur geringem) Vorwissen seine eigene Position in einer bereits vorhandenen Karte des Roboters zuverlässig zu ermitteln. Diese Fähigkeit wird (globale) Selbstlokalisierung genannt und ist beispielsweise erforderlich, wenn der Roboter vollständig abgeschaltet oder durch einen Nutzer an eine neue Position versetzt wurde. Hierfür ist es von Vorteil, wenn die ermittelte Vorzugsrichtung M zusammen mit den Kartendaten (z.B. als Attribut des von der Karte abgedeckten Robotereinsatzgebietes oder eines Teils davon) dauerhaft abgespeichert wird, um sie für eine Vereinfachung und somit Verbesserung der Selbstlokalisierung zu verwenden.

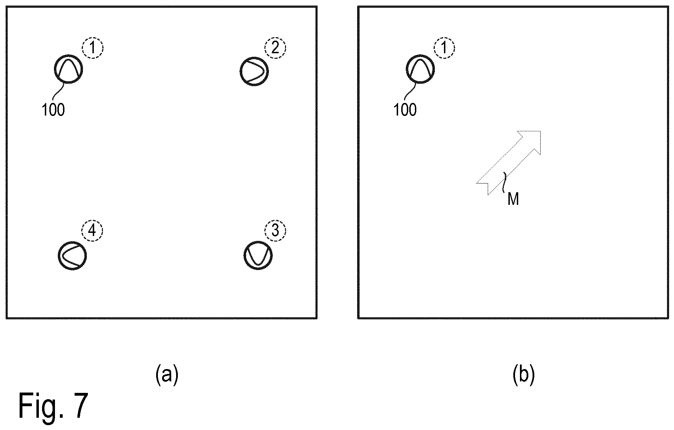

Während der Selbstlokalisierung nimmt der Roboter mit Hilde seiner Sensoren (vgl. Fig. 2, Sensoreinheit 120) Sensordaten auf, welche seine Umgebung im Robotereinsatzgebiet repräsentieren, und versucht, basierend auf den in den Sensordaten enthaltenen Informationen seine Position (inkl. Orientierung) in der Karte des Robotereinsatzgebietes zu ermitteln. Wenn der Roboter 100 zusätzlich zu den zur Navigation genutzten Sensordaten (z. B. Kamerabilder, Abstandsmessung zu Hindernissen) der Sensoreinheit 120, Informationen zur Ermittlung der Vorzugsrichtung beispielsweise mit Hilfe des Magnetometers (z.B. Fig. 2, Sensoreinheit 130) bestimmen kann, so wird die Komplexität der Selbstlokalisierungs-Aufgabe erheblich reduziert durch Einschränkung des Rotationsfreiheitsgrad. Dies soll an dem Beispiel aus Figur 7 verdeutlicht werden. In einem quadratischen Raum ohne weitere Unterscheidungsmerkmale ist es nicht möglich, die Position des Roboters ohne Vorwissen zu bestimmen, da es eine Symmetrie bezüglich einer Rotation um 90° gibt. Wie in Diagramm (a) der Figur 7 dargestellt führt dies zu vier gleichwertigen möglichen Positionen (1, 2, 3, 4) inkl. zugehöriger Orientierungen des Roboters. ohne weitere Informationen (ohne objektives Orientierungsmerkmal) ist es dem Roboter nicht möglich, die vier Positionen aus Diagramm (a) der Fig. 7 zu unterscheiden; eine eindeutige Selbstlokalisierung ist nicht möglich.

Wie in Diagramm (b) der Figur 7 gezeigt, wird die erwähnte Symmetrie bezüglich der Orientierung durch die zusätzliche Information der Vorzugsrichtung aufgehoben, wodurch eine genaue Selbstlokalisierung möglich wird. Dies gilt solange, wie diese Vorzugsrichtung mit einer Genauigkeit von besser als ±45° bestimmt wird. Somit ist eine vergleichsweise große Messungenauigkeit der Vorzugsrichtung keine Einschränkung für den hier beschriebenen Ansatz zur Selbstlokalisierung. Wie zuvor beschrieben kann die Genauigkeit, mit der die Vorzugsrichtung bestimmt werden kann, bei der Kartenerstellung und erstmaligen Bestimmung der Vorzugsrichtung ermittelt werden.

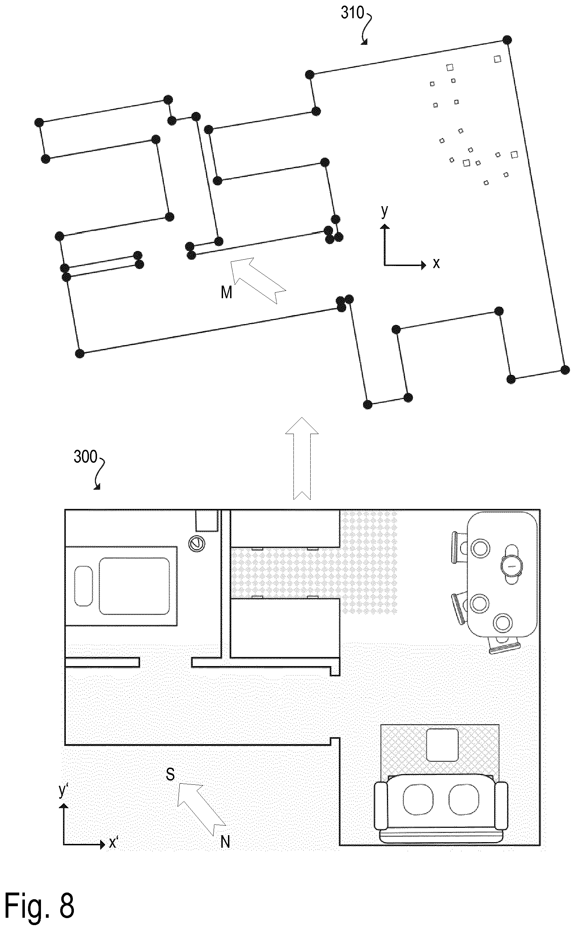

*Vergleich mit vom Nutzer vorgegebenen Karte* - Häufig liegen für Wohnungen eines Nutzers Pläne (insbesondere in Form von Grundrissen) vor, aus denen eine Raumaufteilung und -nutzung hervor geht. Diese sind in der Regel so gestaltet, dass sie für einen Nutzer einfach verständlich sind. Dahingegen sind von einem Roboter zur Navigation erstellte Karten in der Regel schwer verständlich, da die für den Roboter zur Navigation genutzten Landmarken und Hindernisse (Navigationsfeatures) nicht die gleiche Relevanz für den Nutzer haben müssen, da sich beide in der Regel in unterschiedlichen Höhen orientieren. Aufgrund seiner niedrigen Bauhöhe sind für einen Reinigungsroboter z.B. bei einem Tisch nur dessen Beine relevant und nicht der gesamte Tisch. Die Tischplatte "sieht" der Roboter gar nicht. Da beide (Wohnungsplan/Grundriss und Roboterkarte) Informationen über die gleiche Umgebung enthalten, können sie prinzipiell zusammengeführt und für eine bessere Verständlichkeit der Mensch-Roboter-Interaktion genutzt werden. Ein Beispiel für die Zusammenführung zweier Karten ist in Fig. 8 dargestellt.

Hierzu wird der Nutzer dem Roboter über ein HMI eine elektronische Form des Wohnungsplans zur Verfügung stellen (z. B. in einem üblichen Grafikformat als Pixelgraphik oder Vektorgraphik). Die HMI kann die Grafikdatei mit dem Wohnungsplan 300 direkt an den Roboter 100 senden (vgl. drahtlose Übertragung gemäß Fig. 2). Im Hinblick auf begrenzte Rechenkapazitäten eines autonomen mobilen Roboters 100, kann der Wohnungsplan 300 auch an einen Cloud-Service, beispielsweise einem über das Internet erreichbaren Server, gesendet werden, um die nötigen Berechnung durchzuführen. Der über das Internet erreichbare Server hat hierbei Zugriff auf alle notwendigen vom Roboter 100 erstellten Kartendaten (siehe Fig. 8, Roboterkarte 310), beziehungsweise bekommt diese vom Roboter zur Verfügung gestellt. Die Auslagerung von Rechenleistung vom Roboter kann in diesem Sinne als virtuelle Erweiterung und somit Teil des autonomen mobilen Roboters angesehen werden (z.B. als ausgelagerten Teil der Steuereinheit 150, vgl. Fig. 2). Um automatisch einen Zusammenhang zwischen Wohnungsplan und Roboterkarte zu bestimmen, können Methoden der Mustererkennung (*pattern recognition, pattern matching*) genutzt werden. Beispielsweise können Algorithmen eingesetzt werden, die auch für die Selbstlokalisierung verwendet werden. Beispielsweise können Methoden des Maschinellen Lernens (*machine learning*) wie z.B. neuronale Netze, insbesondere Deep-Learning, genutzt werden.

Der besagte Zusammenhang zwischen Wohnungsplan 300 und Roboterkarte 310 kann eine mathematische Koordinatentransformation sein, um Koordinaten (x`, y') bezüglich eines Koordinatensystem des Wohnungsplans 300 in Koordinaten (x, y) bezüglich eines Koordinatensystem der Roboterkarte 310 umzurechnen. Es kann aber auch ausreichen, einzelne Informationen vom Wohnungsplan in die Roboterkarte zu übernehmen. Beispielsweise können basierend auf dem Wohnungsplan die 300 topologischen Strukturen der Wohnung (d.h. des Robotereinsatzgebietes) analysiert werden. Diese beschreibt beispielsweise, welche Räume in der Wohnung vorhanden sind, und wie diese mit Türdurchgängen verbunden oder durch Wände getrennt sind. Die Roboterkarte kann anschließend darauf hin analysiert werden, ob und wie diese topologische Struktur in dieser wieder zu finden sind. Dies geschieht beispielsweise mit einer automatischen Raumaufteilung der Roboterkarte und deren Anpassung an die Raumaufteilung des Wohnungsplans. Basierend auf dieser Raumaufteilung könne Informationen wie Raumnamen und -nutzung aus dem Wohnungsplan 300 in die Roboterkarte 310 übernommen werden.

Wie erwähnt, kann der Nutzer dem Roboter 100 eine Karte in elektronscher Form zur Verfügung stellen, aus der der Roboter 100 ganz allgemein Informationen entnehmen und diese verwenden kann, um die von ihm selbst generierte Karte aufzubauen oder zu ergänzen. Die vom Nutzer zur Verfügung gestellte Karte könnte z.B. eine einfache Handskizze des Grundrisses einer Wohnung (des Robotereinsatzgebietes) sein. Der Roboter kann aus dieser Handskizze z.B. topologische Informationen über die Raumaufteilung (ungefähre Form, Größe und Lage der Räume und die Verbindungen zwischen den Räumen) extrahieren und diese Informationen für die Bestimmung der Aufteilung der von ihm selbst ermittelten Karte in einzelne Räume nutzen. Die Handskizze könnte auch größere Möbelstücke enthalten, die der Roboter 100 von selbst nicht als solche erkennen kann (für den Roboter ist z.B. ein Schrank und eine Wand gleichermaßen ein Hindernis und kann nicht immer unterschieden werden).

Ein Wohnungsplan insbesondere in Form eines Grundrisses enthält häufig Informationen über die Ausrichtung der dargestellten Wohnung in Nord-Süd-Richtung. Durch Bestimmen der Vorzugsrichtung M basierend auf Magnetfeldmessungen durch den Roboter 100 kann diese Nord-Süd-Ausrichtung identifiziert werden (siehe Fig. 3, Vorzugsrichtung M in Roboterkarte 310). Hierdurch wird das Bestimmen eines Zusammenhangs zwischen Wohnungsplan 300 und Roboterkarte 310 erheblich vereinfacht, da der Rotationsfreiheitsgrad erheblich eingeschränkt wird. Hierbei ist ebenfalls eine vergleichsweise geringe Genauigkeit der Übereinstimmung der durch den Roboter bestimmten Vorzugsrichtung und der im Plan 300 verzeichneten Nord-Süd-Ausrichtung notwendig. Die Vorzugsrichtung kann vielmehr als erste Schätzung dienen, die mit weiteren Methoden der Mustererkennung verbessert wird. Beispielsweise kann eine exakte Ausrichtung der Roboterkarte gegenüber dem Wohnungsplan auf Basis des Verlaufs der Hindernisse insbesondere der Wände bestimmt werden.

Der Vorteil bei diesem Vorgehen ergibt sich aus der Tatsache, dass eine Wohnung meist im Wesentlichen aus zueinander parallelen und orthogonalen Wänden aufgebaut ist. Eine Analyse der Verläufe der Wände führt somit auf vier Hauptrichtungen. Durch Bestimmen der Vorzugsrichtung M wird diese Vielfachheit auf einfache Art aufgehoben (ähnlich wie bei der Selbstlokalisierung gemäß Fig. 7).

*Austausch von Karten zwischen Robotern* - In einigen Situationen kann es erwünscht sein, dass neuer (zweiter) Roboter mit einer Karte arbeitet, die er nicht oder nur teilweise selber erstellt hat. In diesem Fall kann der zweite Roboter von dem ersten Roboter die Karte übernehmen und diese verwenden. Beispielsweise kann ein Roboter dazu eingerichtet sein, mit einer Karte dauerhaft zu navigieren und diese für die Nutzerinteraktion zu benutzen. Solch eine Karte kann beispielsweise durch Benennen von Räumen und Eintragen von nutzerspezifischen Teilgebieten mit hohem Zeitaufwand für einen Nutzer personalisiert worden sein. Wenn jetzt ein neuer zweiter Roboter in diesem schon kartierten Robotereinsatzgebiet eingesetzt werden soll (z.B. weil der erste Roboter ersetzt oder ergänzt wird), so ist es für den Nutzer eine wesentliche Erleichterung, wenn die Kartendaten des ersten Roboters auf den zweiten Roboter übertragen werden können.

Hierbei entsteht das Problem, dass beispielsweise Aufgrund von Unterschieden in der Sensorik die Karten zweier Roboter sich unterscheiden können. Beispielsweise können die beiden Roboter unterschiedliche Sensoren besitzen, so dass zumindest Teile der Umgebung entsprechend unterschiedlich detektiert werden. So kann ein neuer Roboter eine verbesserte Sensorik enthalten, mit der beispielsweise Abstände zu Hindernissen oder mit der beispielsweise die Bewegung des Roboters (z.B. mittels Odometrie) genauer bestimmt werden können, sodass die Position der Hindernisse in der Karte sowie die Position (inkl. Orientierung) des Roboters relativ zur Karte genauer erfasst werden. Alternativ oder zusätzlich kann ein neuer Roboter Sensoren besitzen (z.B. enthalten in der Sensoreinheit 120, vgl. Fig. 2), die neben den bisher für die Navigation genutzten Eigenschaften der Umgebung (Landmarken und/oder Hindernisse) neue zuvor nicht detektierbare Informationen erfasst. Beispielsweise kann bei einem neuen Roboter eine Sensorik zur Abstandsmessung in einer horizontalen Ebene so erweitert werden, dass Abstände außerhalb dieser Ebene erfasst werden, wodurch ein dreidimensionales Abbild der Umgebung erfasst wird (z. B. mittels 3D-Kamera). In einer weiteren Variante kann ein vorhandener optischer Sensor zur Abstandsmessung durch einen Ultraschallsensor ergänzt werden, der transparente oder spiegelnde Objekte besser erkennen kann.

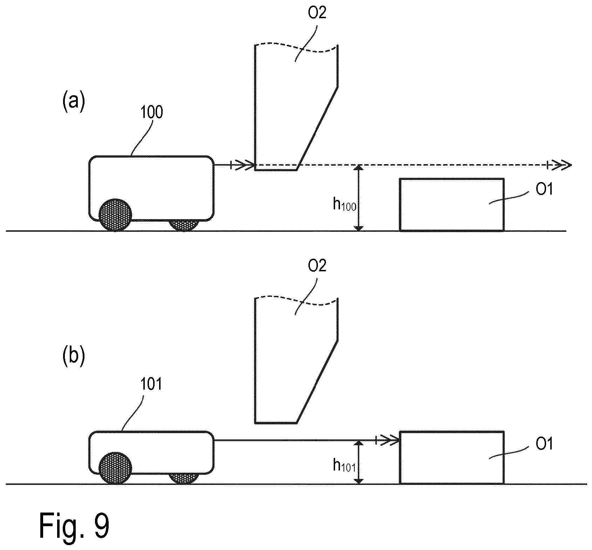

Ebenfalls ist es möglich, dass die beiden Roboter die gleichen Sensoren mit unterschiedlicher Anordnung besitzen, so dass zumindest Teile der Umgebung unterschiedlich detektiert werden. Figur 9 zeigt exemplarisch zwei Roboter 100 und 101 mit einer Sensorik (z.B. enthalten in Sensoreinheit 120, vgl. Fig. 2) zur Abstandsmessung in einer horizontalen Ebene (parallel zur Bodenfläche) der gleichen Bauart (z.B. Abtasten mit einem Laser-Abstandsmesser). Jedoch befindet sich konstruktionsbedingt durch die unterschiedliche Bauhöhe der Roboter 100, 101 (bzw. aufgrund unterschiedlicher Einbauhöhe des Sensors) die Ebene, in welcher die Abstände gemessen werden, in unterschiedlichen (vertikalen) Abständen h₁₀₀ bzw. h₁₀₁ zur Bodenfläche. Hierdurch kann es passieren, dass der höhere Roboter 100 niedrige Hindernisse O1 nicht detektiert, jedoch von oben herunterhängende Hindernisse O2 detektiert (siehe Diagramm (a) in Fig. 9). Umgekehrt kann der niedrige Roboter 101 herunterhängende Hindernisse O2 nicht erkennen, jedoch niedrige Hindernisse O1 erkennen kann (siehe Diagramm (b) in Fig. 9). Folglich verwenden die Roboter 100, 101 unterschiedliche Hindernisse zur Orientierung und die jeweils benutzten Karten können sich unterscheiden.

Selbst bei Robotern der gleichen Bauart mit gleicher Sensorik kann es Unterschiede in den Karten geben, die sich aufgrund unterschiedlich kalibrierter Sensoren und den hiermit verbunden Unterschieden in der Messgenauigkeit (z.B. aufgrund von Fertigungstoleranzen) ergeben. Beispielsweise kann ein Sensor zur Distanzmessung eine systematische Abweichung von 5% oder 10% besitzen, was sich unmittelbar auf die erstellte Karte auswirkt. Die verwendeten Algorithmen zur Kartenerstellung und Navigation können robust gegenüber solchen systematischen Fehlern gestaltet werden, da hierbei die gemessenen und die in der Karte verzeichneten Abstände weitgehend übereinstimmen. Jedoch gibt es Problem, wenn von einem systematischen Fehler (z. B. -5%) des Sensors eines ersten Roboters auf einen anderen systematischen Fehler (z. B. +5%) des Sensors eines zweiten Roboters gewechselt wird, da nun die gemessenen Abstände möglicherweise nicht mehr mit den in der Karte verzeichneten Abständen übereinstimmen.

Folglich wird die vom Roboter bestimmte Position eines Hindernisses und/oder einer Landmarke von der in einer von einem anderen Roboter übernommenen Karte gespeicherten Position abweichen und muss entsprechend korrigiert werden. Darüber hinaus können neue Hindernisse und/oder Landmarken erkannt werden, die in der übernommenen Karte nicht verzeichnet sind. Einzelne Hindernisse und/oder Landmarken die in der übernommenen Karte verzeichnet sind, "sieht" der andere Roboter unter Umständen nicht.

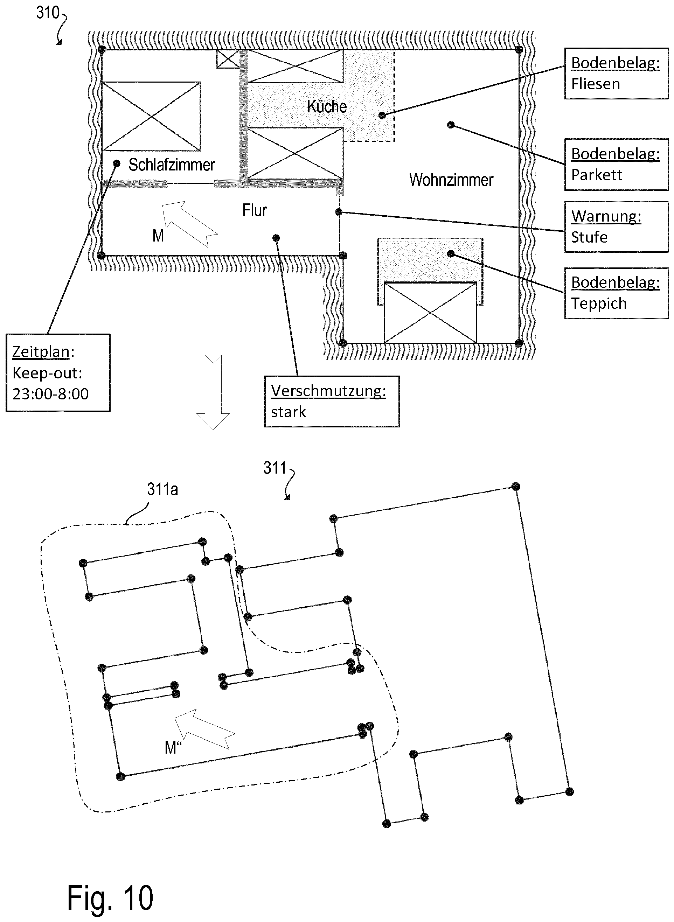

Dies führt dazu, dass die Positionsbestimmung eines Roboters in einer nicht von ihm selbst bestimmten Karte deutlich erschwert ist. Deshalb ist es notwendig für den neuen Roboter eine neue Karte zu erstellen, in der die Positionen der Hindernisse und/oder Landmarken an die Sensorik des neuen Roboters angepasst sind. Hierbei sollen die Informationen der ersten Karte genutzt werden, um insbesondere die vom Nutzer eingegebenen und/oder bestätigten Informationen beizubehalten. Die so neu erhaltene Karte, welche insbesondere auch die vom Nutzer eingegebenen Informationen enthält, kann dauerhaft abgespeichert werden und von dem neuen Roboter sowohl für die Nutzerinteraktion als auch für die Navigation in nachfolgenden Robotereinsätzen verwendet werden. Ein Beispiel ist in Fig. 10 dargestellt. Fig. 10 zeigt eine Karte 310 des Roboters 100, die bereits vom Benutzer editiert (mit Attributen versehen) und bestätigt wurde. Derartige Attribute können z.B. folgendes umfassen: Benennung der Räume (z.B. "Flur", "Schlafzimmer", "Wohnzimmer", Küche", etc.), Zeitpläne (z.B. "keep-out von 23 bis 6 Uhr"), Angaben zum Verschmutzungsgrad (z.B. üblicherweise starke Verschmutzung im Flur, Roboter reinigt öfter), Angaben zum Bodenbelag (z.B. "Parkett", "Fliesen, "Teppich", etc.), Vorzugsrichtung M, Warnhinweise (z.B. "Stufe", Roboter fährt langsam), etc. In der vom z.B. neuen Roboter 101 neu erstellte Karte 311 fehlen diese vom Nutzer eingegeben und/oder bestätigten Attribute. Diese können aus der Karte 310 automatisch in die Karte 311 übernommen werden.

Die so neu erhaltene Karte 311 (mit der zusätzlichen aus der Karte 310 transferierten Information) kann dem Nutzer zur Bestätigung vorgelegt werden, so dass dieser prüfen kann, ob die Übertragung der Information korrekt erfolgte. Gegebenenfalls kann der Nutzer die Daten korrigieren und/oder aktualisieren, bevor die so erhaltene Karte dauerhaft gespeichert wird. Das Zuordnen ("Mapping") der in den beiden Karten enthaltenen Informationen kann erheblich vereinfacht werden, wenn zu der Karte des ersten Roboters eine Vorzugsrichtung M beispielsweise durch Messung des Magnetfeldes bestimmt wurde. Der zweite Roboter 101 kann ebenfalls die Vorzugsrichtung M" bestimmen und hierdurch die Ausrichtung seiner der Karte 311 (in Bezug auf die Karte 310 des Roboters 100) ermitteln. Hierbei ist ebenfalls eine vergleichsweise geringe Genauigkeit der Übereinstimmung der durch den Roboter 101 bestimmten Vorzugsrichtung M" und der mit der Karte 310 gespeicherten Vorzugsrichtung M notwendig. Die basierend auf der Vorzugsrichtung bestimmte Orientierung kann vielmehr als erste Schätzung dienen, die mit weiteren Methoden der Mustererkennung und insbesondere der Selbstlokalisierung verbessert wird.

In einer einfachen Variante baut der neue Roboter 101 beispielsweise in einer Lernfahrt oder bei einem ersten Arbeitseinsatz (z. B. vollständige Reinigung des Einsatzgebiets/Wohnung) eine Karte (z.B. Karte 311, siehe Fig. 10) auf, die temporär genutzt wird. Die neue dauerhaft zu nutzende Roboterkarte des Roboters 101 wird durch Kombination der temporären Karte 311 mit der von einem anderen Roboter (z.B. Roboter 100) zu übernehmenden Karte 310 erstellt. Hierzu wird beispielsweise auf Basis der während der Lernfahrt erkannten und in der temporären Karte 311 verzeichneten Hindernisse und/oder Landmarken und den in der Karte 310 verzeichneten Hindernissen und/oder Landmarken eine Transformation zwischen den Koordinaten der temporären 311 Karte und Koordinaten der Karte 310 erstellt. Die Transformation kann beispielsweise aus Rotation, Translation und Skalierung bestehen. Mit Hilfe dieser Koordinatentransformation können die Informationen wie z. B. die Raumaufteilung und Teilgebietsgrenzen, Raumbenennung oder benutzerdefinierte Bereiche sowie Zeitpläne und dgl. aus der zu übernehmenden Karte zu der temporären Karte hinzugefügt werden. Es sei angemerkt, dass zur Ermittlung der Transformation ein teilweiser Aufbau der temporären Karte 311 ausreichend ist, und keine vollständige Erkundung notwendig ist. Beispielsweise kann nur ein Raum einer Wohnung erkundet werden und dieser mit der bekannten Karte 310 verglichen werden. Beispielsweise kann der Nutzer vorgeben, welcher Raum hierbei erkundet wird. In dem in Fig. 10 gezeigten Beispiel ist der linke Teil der Karte 311 als noch nicht erkundeter Bereich 311a markiert. Die Übertragung der Karteninformation aus der Karte 310 kann erfolgen, bevor der Roboter 101 den Bereich 311a erkundet hat, weil bereits nach dem Aufbau des rechten Teils der Karte 311 genügend Daten vorliegen, um die erwähnte Transformation durchzuführen. Beispielsweise kann der Nutzer einen Startpunkt oder einen Raum in dem der Startpunkt liegt an den Roboter übermitteln und/oder automatisiert basierend auf der bestehenden Karte 310 dem Nutzer ein Raum zur Neuerkundung durch den Roboter vorgeschlagen werden. In diesem Fall "weiß" der Roboter von vornherein, in welchem Raum er sich befindet und die Selbstlokalisation in der neuen Karte wird vereinfacht (durch Verringerung der Möglichkeiten).

In einer alternativen Variante nutzt der neue zweite Roboter 101 die zu übernehmende Karte 310 (erhalten z.B. vom Roboter 100) schon während der Lernfahrt oder bei einem ersten Arbeitseinsatz für die Navigation. Hierdurch hat der Roboter 101 beispielsweise Kenntnis über in der zu übernehmenden Karte 310 verzeichnete Gefahrenbereiche (also Bereiche, die die Funktionstätigkeit des Roboters beeinträchtigen können, wie Treppen, Kabel, etc.) und kann diese meiden. Zudem ist aufgrund des Vorwissens eine deutlich schnellere Kartenerstellung möglich. Hierbei wird die für eine robuste Roboternavigation notwendige Fähigkeit des Roboters genutzt, die Hindernisse/Landmarken wiederzuerkennen und gegebenenfalls ihre Position, Form und/oder Größe in der Karte zu korrigieren, neue erkannte Hindernisse/ Landmarken zu der Karte hinzuzufügen und nicht (mehr) vorhanden Hindernisse/Landmarken aus der Karte zu löschen. Die Nutzbarkeit der "alten" Karte 310 durch den Roboter 101 kann erhöht werden, wenn die Karten 310 und 311 anhand der zugehörigen (gespeicherten bzw. neu ermittelten) Vorzugsrichtung aneinander ausgerichtet werden können. Alternativ oder zusätzlich kann die Ausrichtung der Karten verbessert bzw. vereinfacht werden, wenn der Roboter 101 vor dem Aufbau der neuen Karte 311 von einer definierten, bekannten Position aus gestartet wird (z.B. von der Basisstation 110).

Beispielsweise werden in probabilistischen SLAM-Verfahren die Wahrscheinlichkeiten für die Position von Hindernissen/Landmarken bestimmt. Beispielsweise wird der Erwartungswert, die Standardabweichung und Korrelation zwischen den Positionen der Hindernisse/Landmarken bestimmt und in der Karte des Roboters gespeichert. Um eine zu übernehmende Karte auf einfache Weise für einen neuen Roboter mit gleicher oder ähnlicher Sensorik nutzbar zu machen, kann beispielsweise die Positionsunsicherheit der in der Karte verzeichneten Hindernisse vergrößert werden. Beispielsweise kann die gespeicherte Standardabweichung vergrößert (z. B. mit Multiplikation mit einer wählbaren Konstante z. B. 2) und die Korrelationen verkleinert werden (z. B. mit Multiplikation mit einer wählbaren Konstante z. B. 1/2). Während der Lernfahrt oder bei einem ersten Arbeitseinsatz werden die Wahrscheinlichkeitsverteilungen der Positionen entsprechend der Messwerte der neuen Sensorik aktualisiert. Beispielsweise werden die Erwartungswerte, die Standardabweichungen und Korrelationen zwischen den Positionen der Hindernisse/Landmarken aktualisiert und gespeichert.

Auf Basis der Korrekturen von wiedererkannten Hindernissen/Landmarken können auch die basierend auf einer Nutzereingabe erhaltenen Informationen korrigiert werden. Beispielsweise kann festgestellt werden, dass sich der gemessene Abstand zwischen zwei Hindernissen vergrößert hat (z. B. aufgrund einer besseren Messgenauigkeit der Sensorik). Die Position einer zwischen den beiden Hindernissen verlaufenden benutzerdefinierten Bereichsgrenze kann beispielsweise so korrigiert werden, dass das Verhältnis der Abstände zu beiden Hindernissen konstant bleibt. Die vom Nutzer eingegebenen Bezeichnungen z. B. für Hindernisse, Bereiche oder Räume bleiben hierbei auf natürliche Weise erhalten.

Neben den direkt zu messenden Informationen, die direkt für die Navigation genutzt werden (insbesondere Hindernisse und/oder Landmarken), enthält eine Karte auch abgeleitete Informationen. Beispielsweise kann ein erkannter (oder erlernter) Gefahrenbereich wie beispielsweise eine Türschwelle/Stufe (siehe Fig. 10) oder eine Absturzkante (z.B. bei einer Treppe), von der der Roboter abstürzen kann, und deshalb vom Roboter vorsichtig befahren oder gemieden werden soll, in den übernommenen Kartendaten enthalten sein. Beispielsweise kann basierend auf der erkannten Umgebung eine automatische Raumaufteilung vorgenommen und in der übernommenen Karte abgespeichert worden sein. Solche abgeleiteten Informationen können neu erstellt werden oder wie durch einen Nutzer eingegebene Informationen behandelt werden.

*Verbesserung des Andockens an eine Basisstation* - Zu einem autonomen mobilen Roboter gehört in der Regel eine Basisstation (siehe Fig. 1, Basisstation 110), an der der Roboter beispielsweise seine Batterie aufladen kann. Für Reinigungsroboter sind Basisstationen bekannt, an denen Schmutz abgeladen oder Reinigungsflüssigkeiten aufgenommen werden können.

Es sind verschiedene Vorgehensweisen bekannt, wie der Roboter seine Basisstation erkennt und einen Andockpfad an diese plant. Wenn der Roboter eine Karte seiner Umgebung zum Navigieren benutzt, so kann die Position der Basisstation in der Karte verzeichnet sein. Der Roboter kann so jederzeit einen Pfad in die Nähe der Basisstation planen, sodass er sie mit einem Sensor erkennen und einen konkreten Andockpfad bestimmen kann.

Zum Erkennen der Basisstation sind verschieden Methoden bekannt. So kann die Basisstation ein Signal beispielsweise in Form von Infrarotstrahlung aussenden, welches der Roboter mit einem Sensor wie einer Kamera oder einer Photodiode erkennt und dem Signal zu seiner Quelle folgt. Andere Systeme nutzen den Navigationssensor, mit dem Informationen über die Umgebung gesammelt werden, um die Basisstation an einer Markierung oder direkt als solche an ihrer Form zu erkennen. So kann der Navigationssensor eine Kamera sein, in deren Bildaufnahmen die Basisstation und deren Position erkannt werden kann, oder die ein bestimmtes an der Basisstation angebrachtes Muster (z.B. QR-Code) erkennt. Der Navigationssensor kann auch ein Sensor zur Abstandsmessung sein, mit dem der Abstand zu Hindernissen bestimmt werden kann. Aus den Abstandsinformationen kann die Form von Hindernissen ermittelt werden und somit die Basisstation beispielsweise anhand ihrer spezifischen Form erkannt werden.

Wenn die Basisstation erkannt und ihre Position relativ zum Roboter bestimmt wurde, kann der Roboter einen Andockpfad für die Durchführung eines Andockmanövers bestimmen, und entsprechend gesteuert und geregelt werden. Da Steuerkommandos in der Regel nicht exakt ausgeführt werden, sondern mit Fehlern behaftet sind, werden die Positionsbestimmung der Basisstation und eine Anpassung des Andockpfads in geeigneten Abständen wiederholt. Hierbei tritt das Problem auf, dass der Navigationssensor einen Mindestabstand besitzen kann, um die Position der Basisstation zuverlässig zu ermitteln. So liefert eine Kamera im Nahbereich möglicherweise keine scharfen Bilder, oder bei der Abstandsmessung kann ein Mindestabstand zum Sensor nötig sein, um Abstände zuverlässig zu messen oder einen hinreichend großen Bereich der Basisstation zu erkennen. Das letzte Stück des Andockpfads fährt der Roboter somit ohne zusätzliche Kontrolle. Insbesondere bei schlechtem Untergrund wie beispielsweise Teppichboden, auf dem die Räder des Roboters einen hohen Schlupf haben, kann es hierdurch zu einem Fehlschlagen des Andockens an die Basisstation kommen. In vielen Fällen ist der Navigationssensor darauf ausgelegt Informationen über größere Entfernungen zu sammeln. Dies geht in der Regel einher, dass im Nahbereich keine oder nur eingeschränkte Informationen (insbesondere über die Basisstation während des Andockmanövers) gesammelt werden (z.B. falsche/fehlende Fokussierung bei einer Kamera). In diesen Fällen muss der Roboter die letzten Zentimeter (d.h. im Nahbereich der Basisstation) des Andockpfades "blind" fahren.

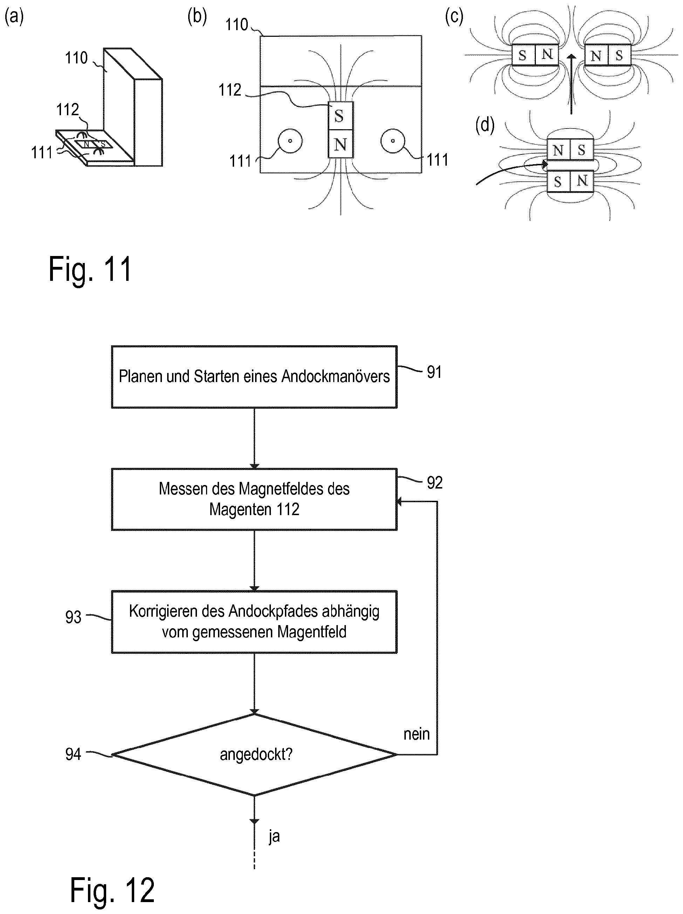

Dies kann vermieden werden, wenn die Basisstation eine Markierung besitzt, mit der im Nahbereich zuverlässig die Relativposition des Roboters zur Basisstation ermittelt werden kann. Diese Markierung kann beispielsweise durch Erzeugen eines Magnetfeldes geschehen, welches der Roboter mit Hilfe eines Magnetometers messen kann. Insbesondere kann das Magnetfeld durch Permanentmagnete erzeugt werden. Alternativ oder zusätzlich können Elektromagnete genutzt werden. Permanentmagnete haben den weiteren Vorteil, dass der Roboter durch Messen des Magnetfelds detektieren kann, ob er auf der Ladestation steht oder nicht, unabhängig davon, ob an den Ladekontakten eine Ladespannung anliegt. So kann der Roboter insbesondere auch bei Stromausfall erkennen, dass er an der Basisstation steht. Diese Situation ist in Fig. 11 dargestellt. Diagramm (a) aus Fig. 11 zeigt exemplarisch eine perspektivische Ansicht einer Basisstation 110 mit Ladekontakten 111 und einem Magnet 112. Diagramm (b) zeigt die dazugehörige Draufsicht. Der Magnet 112 muss nicht in der Mitte der Basisstation angeordnet sein. Der Magnet kann auch asymmetrisch in der Basisstation 110 angeordnet sein, beispielsweise so, dass er gegenüber einem asymmetrischen (vgl. Fig. 3, Diagramm (c)) im Roboter angeordneten Magnetometer liegt, wenn der Roboter angedockt ist.

Ein einzelner Magnet wie Magnet 112 in Fig. 11, in Diagramm (a), erzeugt ein Dipolfeld. Das heißt, das Magnetfeld hat an jedem Ort vor der Basisstation eine charakteristische Richtung und einen charakteristischen Wert. Hieraus lässt sich prinzipiell die Position (und Orientierung) des Roboters relativ zum Magneten und somit relativ zur Basisstation bestimmen. Zusätzlich kann während eines Andockmanövers das Magnetfeld und/oder die Änderung des Magnetfelds erfasst werden. Hierdurch können zusätzliche Positionsinformationen gewonnen werden. Auf Basis der so bestimmten Position (und Orientierung) kann ein fehlerhaftes Ausführen des Andockpfads erkannt und korrigiert werden. Diese Korrektur des aktuell durchgeführten Andockpfades ist insbesondere in der unmittelbaren Umgebung der Basisstation nützlich, in der der Navigationssensor (vgl. Fig. 2, Sensoreinheit 120) "blind" sein kann oder nur sehr ungenaue Informationen liefert. Exemplarisch zeigt Fig. 12 die Vorgehensweise beim Andocken. Zunächst wird auf herkömmliche Weise (z.B. kartenbasiert) ein Andockpfad für ein Andockmanöver geplant (Fig. 12, Schritt 91). Dazu wird in der Regel mittels eines Navigationssensors (vgl. Fig. 2, Sensoreinheit 120) die Pose der Basisstation 110 relativ zum Roboter 100 bestimmt. Während des Andockmanövers wird das Magnetfeld mit einem Magnetometer (z.B. als Teil der Sensoreinheit 130) gemessen, welches von dem Magneten 112 (vgl. Fig. 11) an der Basisstation 110 erzeugt wird (Fig. 12, Schritt 92). Basierend auf diesen Messungen des Magnetfeldes kann der Roboter 100 seinen Andockpfad laufend überwachen und bei Bedarf auch korrigieren (Fig. 12, Schritt 93). Das fortlaufende Überwachen und Korrigieren des Andockpfades wird im Nahbereich um die Basisstation 110 solange durchgeführt, bis der Roboter erfolgreich angedockt hat (Fig. 12, Schritt 94). Alternativ kann es wünschenswert sein, dass der Roboter 100 rückwärts an die Basisstation andocken soll, während der Navigationssensor (vgl. Fig. 2, Sensoreinheit 120) nach vorne gerichtet ist. In diesem Fall "sieht" der Roboter 100 während des Andockmanövers die Basisstation 110 gar nicht. In diesem Fall sind die erwähnten Magnetfeldmessungen zur Kontrolle und Korrektur des Andockmanövers besonders nützlich.

Es können weitere Magneten eingesetzt werden, um die charakteristische Form des Magnetfelds zu beeinflussen und so die Genauigkeit der Positionsbestimmung basierend auf der Magnetfeldmessung zu verbessern. Beispiele sind in den Diagrammen (c) und (d) aus Fig. 11 gezeigt. Beispielsweise können zwei Magnete so kombiniert werden, dass ein Quadrupolfeld entsteht. Die Kombination mehrerer Magnete hat den zusätzlichen Vorteil, dass die Reichweite des erzeugten Magnetfelds und somit die Störung der Umgebung durch das Magnetfeld reduziert wird. Beispielsweise reduziert sich die Feldstärke eines Quadrupolfeldes viermal schneller als die Feldstärke eines Dipolfeldes. Somit können lokal deutlich stärkere Feldstärken genutzt und somit zuverlässig gemessen werden, ohne die Umgebung zu stören. In dem Beispiel aus Diagramm (c) der Fig. 11 sind zwei entgegengesetzt orientierte Magnete entlang einer Achse ausgerichtet. Der Roboter könnte sich in diesem Fall der Basisstation beispielsweise entlang der Feldlinien in Richtung magnetischem Nordpol nähern. In dem Diagramm (d) der Fig. 11 sind zwei Magnete antiparallel angeordnet. In diesem Fall kann sich der Roboter der Basisstation beispielsweise entlang des stärksten Anstiegs der Feldstärke nähern. Die jeweiligen möglichen Pfade des Roboters sind mit einem Pfeil gekennzeichnet. In beiden Fällen ändert sich das Magnetfeld stark in Stärke und Richtung innerhalb kurzer Distanzen und ermöglicht so eine vergleichsweise genaue Ortsbestimmung. Die Feldstärke fällt schnell ab, so dass eine Beeinflussung der Umgebung (und insbesondere die Bestimmung der Vorzugsrichtung) reduziert wird oder stärkere Magnete gewählt werden können.

## Patentansprüche

1. Ein Verfahren für einen autonomen mobilen Roboter, das folgendes umfasst:
Erfassen von Informationen über die Struktur der Umgebung des Roboters (100) im Robotereinsatzgebiet mittels einer ersten Sensoreinheit (120) des Roboters (100) und Erstellen einer Karte basierend auf den erfassten Informationen;
Messen einer Richtung und/oder Betrag von zumindest einer physikalischen Vektorfeldgröße für eine oder mehrere Posen des Roboters (100) mittels einer zweiten Sensoreinheit (130);
Ermitteln - basierend auf den für eine oder mehrere Posen des Roboters (100) durchgeführten Messungen - einer Vorzugsrichtung (M) der zumindest einen physikalischen Vektorfeldgröße für das Robotereinsatzgebiet oder eines Teils davon;
Speichern der ermittelten Vorzugsrichtung (M) in der Karte;
Senden der Karte an eine Mensch-Maschine-Schnittstelle (200); und
Anzeigen der Karte durch die Mensch-Maschine-Schnittstelle (200) unter Berücksichtigung der vom Roboter ermittelten Vorzugsrichtung (M) der zumindest einen physikalischen Vektorfeldgröße.

2. Das Verfahren gemäß Anspruch 1, das weiter umfasst:
Messen einer physikalischen Vektorfeldgröße mittels mindestens eines Sensors in der Mensch-Maschine-Schnittstelle (200),
Bestimmen einer Ausrichtung der Mensch-Maschine-Schnittstelle (200) basierend auf den Messungen in Bezug auf die Umgebung; und
Berücksichtigen der bestimmten Ausrichtung der Mensch-Maschine-Schnittstelle (200) bei der Anzeige der Karte.

3. Das Verfahren gemäß Anspruch 1 oder 2, das weiter umfasst:
Entgegennehmen einer kartenbasierten Nutzereingabe durch die Mensch-Maschine-Schnittstelle (200); und
Senden eines von der Nutzereingabe abhängigen Steuerkommandos an den Roboter (100).

4. Ein System, das folgendes umfasst:
einen autonomer mobiler Roboter, der folgendes aufweist:
eine Antriebseinheit (170) zur Bewegung des Roboters (100) innerhalb eines Robotereinsatzgebietes;
eine erste Sensoreinheit (120) zur Erfassung von Informationen über die Struktur der Umgebung des Roboters (100) im Robotereinsatzgebiet;
eine zweite Sensoreinheit (130) zur Messung einer Richtung und/oder Betrag von zumindest einer physikalischen Vektorfeldgröße an einer oder mehrerer Posen des Roboters (100);
eine Kommunikationseinheit (140); und
eine Steuereinheit (150), die dazu ausgebildet ist:
basierend auf den von der ersten Sensoreinheit (120) gelieferten Informationen über die Struktur der Umgebung im Robotereinsatzgebiet und einer Karte des Robotereinsatzgebietes den Roboter (100) in dem Robotereinsatzgebiet zu navigieren; und
basierend auf den mit der zweiten Sensoreinheit (130) bei einer oder mehreren Posen des Roboters (100) durchgeführten Messungen der zumindest einen physikalischen Vektorfeldgröße eine Vorzugsrichtung (M) derselben in dem Robotereinsatzgebiet oder eines Teils davon zu ermitteln, und
ein elektronisches Gerät, wobei der Roboter dazu ausgebildet ist, mittels der Kommunikationseinheit (140) mit dem elektronischen Gerät zu kommunizieren,
wobei das elektronische Gerät dazu ausgebildet ist, die Karte des Robotereinsatzgebietes sowie die dieser zugeordneten Vorzugsrichtung (M) vom Roboter (100) zu empfangen,
wobei das elektronische Gerät eine Mensch-Maschine-Schnittstelle ist, die dazu ausgebildet ist, die vom Roboter (100) empfangene Karte unter Berücksichtigung der Vorzugsrichtung (M) anzuzeigen.

5. Das System gemäß Anspruch 4,
wobei die zweite Sensoreinheit (130) einen Magnetometer zur Messung eines Magnetfeldes oder einen Beschleunigungssensor zur Messung der Erdbeschleunigung oder beides aufweist.

6. Das System gemäß Anspruch 4,
wobei die zumindest eine physikalischen Vektorfeldgröße ein Magnetfeld umfasst und
wobei die zweite Sensoreinheit (130) dazu ausgebildet ist, Betrag und/oder Richtung eines Magnetfeldes an einer aktuellen Pose des Roboters zu messen.

7. Das System gemäß einem der Ansprüche 4 bis 6,
wobei die Ermittlung der Vorzugsrichtung (M) auf zumindest zwei Messungen an unterschiedlichen Posen des Roboters (100) basiert.

8. Das System gemäß einem der Ansprüche 4 bis 7,
wobei die Ermittlung der Vorzugsrichtung (M) auf mehreren Messungen basiert die an einer bestimmten Position, jedoch unterschiedlichen Orientierungen des Roboters gemacht werden.

9. Das System gemäß einem der Ansprüche 4 bis 8,
wobei die Ermittlung der Vorzugsrichtung (M) Messwerte auf zumindest einer ersten Messung und einer zweiten Messung basiert, wobei bei der ersten Messung der Roboter die entgegengesetzte Orientierung einnimmt wie bei der zweiten Messung.

10. Das System gemäß einem der Ansprüche 4 bis 9,
wobei die Steuereinheit (150) dazu ausgebildet ist, für die ermittelte Vorzugsrichtung (M) einen die Genauigkeit repräsentierenden Wert, insbesondere eine Varianz oder Standardabweichung zu berechnen.

11. Das System gemäß einem der Ansprüche 4 bis 10,
wobei die Steuereinheit (150) dazu ausgebildet ist:
die ermittelte Vorzugsrichtung (M) in der Karte abzuspeichern;
die gespeicherte Karte inklusiver der zugehörigen Vorzugsrichtung (M) zu einem späteren Zeitpunkt wieder zu laden; und
eine globale Selbstlokalisierung des Roboters in der Karte durchzuführen, wobei die in der Karte gespeicherte Vorzugsrichtung (M) und eine oder mehrere von der zweiten Sensoreinheit (130) durchgeführte Messungen berücksichtigt werden.

12. Das System gemäß einem der Ansprüche 4 bis 11,
wobei die Steuereinheit (150) dazu ausgebildet ist:
mittels einer Kommunikationseinheit (140) eine Karte des Robotereinsatzgebietes von einem externen Gerät zu empfangen, wobei die empfangene Karte Information über eine Vorzugsrichtung enthält; und
basierend auf der Vorzugsrichtung der empfangenen Karte und der ermittelten Vorzugsrichtung die Ausrichtung der empfangenen Karte relativ zu einer vom Roboter erstellten Karte zu bestimmen.

13. Das System gemäß Anspruch 12,
wobei die Vorzugsrichtung der empfangenen Karte und die Vorzugsrichtung der vom Roboter erstellten Karte jeweils eine der Karte zugeordnete Himmelsrichtung repräsentieren.

14. Das System gemäß Anspruch 12 oder 13,
wobei die Steuereinheit (150) dazu ausgebildet ist:
Informationen aus der empfangenen Karte in die vom Roboter erstellte Karte zu übertragen, insbesondere Informationen betreffend eine Aufteilung der Karte in Teilgebiete, Bezeichnungen für die Teilgebiete, weitere Informationen betreffend die Teilgebiete.

15. Das System gemäß einem der Ansprüche 4 bis 14,
wobei das elektronische Gerät ein weiterer Roboter (101) ist, der dazu ausgebildet ist, die vom Roboter (100) empfangene Karte unter Berücksichtigung der Vorzugsrichtung (M) zu verarbeiten.

16. Das System gemäß einem der Ansprüche 4 bis 15,
wobei das elektronische Gerät dazu ausgebildet ist, mittels eines Sensors eine physikalische Vektorfeldgröße, insbesondere ein Magnetfeld, zu messen und basierend darauf eine Ausrichtung des elektronischen Geräts zu bestimmen, und insbesondere bei der Anzeige und/oder Verarbeitung der Karte die bestimmte Ausrichtung des elektronischen Geräts zu berücksichtigen.

## Claims

1. A method for an autonomous mobile robot, comprising:
acquiring information about the structure of the surroundings of the robot (100) in the robot area of use by means of a first sensor unit (120) of the robot (100) and creating a map based on the information acquired;
measuring a direction and/or amount of at least one physical vector field variable for one or more poses of the robot (100) by means of a second sensor unit (130);
establishing - based on the measurements carried out for one or more poses of the robot (100) - a preferred direction (M) of the at least one physical vector field variable for the robot area of use or a part thereof;
storing the established preferred direction (M) in the map;
sending the map to a human-machine interface (200); and
displaying the map through the human-machine interface (200) taking into account the preferred direction (M) of the at least one physical vector field variable established by the robot.

2. The method according to claim 1, further comprising:
measuring a physical vector field variable by means of at least one sensor in the human-machine interface (200),
determining an orientation of the human-machine interface (200) based on the measurements relative to the surroundings; and
taking into account the determined orientation of the human-machine interface (200) when displaying the map.

3. The method according to claim 1 or 2, further comprising:
accepting a map-based user input through the human-machine interface (200); and
sending a control command dependent on the user input to the robot (100).

4. A system, comprising:
an autonomous mobile robot, having:
a drive unit (170) for moving the robot (100) within a robot area of use;
a first sensor unit (120) for acquiring information about the structure of the surroundings of the robot (100) in the robot area of use;
a second sensor unit (130) for measuring a direction and/or amount of at least one physical vector field variable for one or more poses of the robot (100);
a communication unit (140); and
a control unit (150) designed to:
based on the information provided by the first sensor unit (120) about the structure of the surroundings in the robot area of use and a map of the robot area of use, navigate the robot (100) in the robot area of use; and
based on the measurements of the at least one physical vector field variable carried out with the second sensor unit (130) in one or more poses of the robot (100), establish a preferred direction (M) of the same in the robot area of use or a part thereof; and
an electronic device, wherein the robot is designed to communicate with the electronic device by means of the communication unit (140),
wherein the electronic device is designed to receive the map of the robot area of use and the preferred direction (M) assigned to it from the robot (100),
wherein the electronic device is a human-machine interface designed to display the map received from the robot (100) taking into account the preferred direction (M).

5. The system according to claim 4,
wherein the second sensor unit (130) has a magnetometer for measuring a magnetic field or an acceleration sensor for measuring the gravitational acceleration or both.

6. The system according to claim 4,
wherein the at least one physical vector field variable comprises a magnetic field, and
wherein the second sensor unit (130) is designed to measure the amount and/or direction of a magnetic field at a current pose of the robot.

7. The system according to any one of claims 4 to 6,
wherein the establishment of the preferred direction (M) is based on at least two measurements at different poses of the robot (100).

8. The system according to any one of claims 4 to 7,
wherein the establishment of the preferred direction (M) is based on several measurements that are made at a specific position but with different orientations of the robot.

9. The system according to any one of claims 4 to 8,
wherein the establishment of the preferred direction (M) bases measured values on at least a first measurement and a second measurement, wherein the robot assumes the opposite orientation in the first measurement as compared to in the second measurement.

10. The system according to any one of claims 4 to 9,
wherein the control unit (150) is designed to calculate a value representing the accuracy, in particular a variance or standard deviation, for the established preferred direction (M).

11. The system according to any one of claims 4 to 10,
wherein the control unit (150) is designed to:
store the established preferred direction (M) in the map;
reload the stored map including the associated preferred direction (M) at a later point in time; and
carry out a global self-localization of the robot in the map, taking into account the preferred direction (M) stored in the map and one or more measurements carried out by the second sensor unit (130).

12. The system according to any one of claims 4 to 11,
wherein the control unit (150) is designed to:
receive a map of the robot area of use from an external device by means of a communication unit (140), wherein the received map contains information about a preferred direction; and
based on the preferred direction of the received map and the established preferred direction, determine the orientation of the received map relative to a map created by the robot.

13. The system according to claim 12,
wherein the preferred direction of the received map and the preferred direction of the map created by the robot each represent a cardinal direction assigned to the map.

14. The system according to claim 12 or 13,
wherein the control unit (150) is designed to:
transmit information from the received map to the map created by the robot, in particular information regarding a division of the map into sub-areas, designations for the sub-areas, further information regarding the sub-areas.

15. The system according to any one of claims 4 to 14,
wherein the electronic device is a further robot (101) which is designed to process the card received from the robot (100) taking into account the preferred direction (M).

16. The system according to any one of claims 4 to 15,
wherein the electronic device is designed to measure a physical vector field variable, in particular a magnetic field, by means of a sensor and to determine an orientation of the electronic device based thereon, and in particular to take into account the determined orientation of the electronic device in the display and/or processing of the map.

## Revendications

1. Procédé pour un robot mobile autonome, lequel comprend les étapes suivantes :
acquisition d'informations sur la structure de l'environnement du robot (100) dans la zone d'utilisation du robot au moyen d'une première unité de capteur (120) du robot (100) et création d'une carte sur la base des informations acquises ;
mesure d'une direction et/ou d'une valeur d'au moins une variable de champ vectoriel physique pour une ou plusieurs poses du robot (100) au moyen d'une seconde unité de capteur (130) ;
détermination - sur la base des mesures effectuées pour une ou plusieurs poses du robot (100) - d'une direction préférée (M) de l'au moins une variable de champ vectoriel physique pour la zone d'application du robot ou une partie de celle-ci ;
mémorisation de la direction préférée déterminée (M) dans la carte ;
envoi de la carte à une interface homme-machine (200) ; et
affichage de la carte par l'interface homme-machine (200) en tenant compte de la direction préférée (M) déterminée par le robot de l'au moins une variable de champ vectoriel physique.

2. Procédé selon la revendication 1, comprenant en outre :
la mesure d'une variable de champ vectoriel physique à l'aide d'au moins un capteur dans l'interface homme-machine (200),
la détermination d'une orientation de l'interface homme-machine (200) sur la base des mesures par rapport à l'environnement ; et
la prise en compte de l'orientation déterminée de l'interface homme-machine (200) lors de l'affichage de la carte.

3. Procédé selon la revendication 1 ou 2, comprenant en outre :
l'acceptation d'une entrée utilisateur basée sur une carte par l'interface homme-machine (200) ; et
l'envoi au robot (100) d'une commande de contrôle en fonction de l'entrée de l'utilisateur.

4. Système, qui comprend les éléments suivants :
un robot mobile autonome, comportant les éléments suivants :
une unité d'entraînement (170) pour déplacer le robot (100) dans une zone de déploiement de robot ;
une première unité de capteur (120) pour acquérir des informations sur la structure de l'environnement du robot (100) dans la zone de déploiement de robot ;
une seconde unité de capteur (130) pour mesurer une direction et/ou une valeur d'au moins une variable de champ vectoriel physique pour une ou plusieurs poses du robot (100) ;
une unité de communication (140) ; et
une unité de commande (150) conçue pour :
faire naviguer le robot (100) dans la zone de déploiement de robot sur la base des informations fournies par la première unité de capteur (120) concernant la structure de l'environnement dans la zone de déploiement de robot et une carte de la zone de déploiement de robot ; et
sur la base des mesures de l'au moins une variable de champ vectoriel physique effectuées avec la seconde unité de capteur (130) dans une ou plusieurs poses du robot (100), déterminer une direction préférée (M) de ladite variable de champ vectoriel dans la zone de déploiement de robot ou d'une partie de ladite variable ; et
un dispositif électronique, dans lequel le robot est conçu pour communiquer avec le dispositif électronique au moyen de l'unité de communication (140),
dans lequel le dispositif électronique est conçu pour recevoir du robot (100) la carte de la zone de déploiement de robot et la direction préférée (M) qui lui est attribuée,
dans lequel le dispositif électronique est une interface homme-machine conçue pour afficher la carte reçue du robot (100) en tenant compte de la direction préférée (M).

5. Système selon la revendication 4,
dans lequel la seconde unité de capteur (130) comporte un magnétomètre pour mesurer un champ magnétique ou un capteur d'accélération pour mesurer l'accélération gravitationnelle ou les deux.

6. Système selon la revendication 4,
dans lequel l'au moins une variable de champ vectoriel physique comprend un champ magnétique et
dans lequel la seconde unité de capteur (130) est conçue pour mesurer la valeur et/ou la direction d'un champ magnétique à une pose actuelle du robot.

7. Système selon l'une des revendications 4 à 6,
dans lequel la détermination de la direction préférée (M) est basée sur au moins deux mesures à différentes poses du robot (100) .

8. Système selon l'une des revendications 4 à 7.
dans lequel la détermination de la direction préférée (M) est basée sur plusieurs mesures qui sont faites à une position spécifique mais avec différentes orientations du robot.

9. Système selon l'une des revendications 4 à 8,
la détermination des valeurs mesurées de direction préférée (M) étant basée sur au moins une première mesure et une seconde mesure, le robot prenant l'orientation opposée dans la première mesure à celle de la seconde mesure.

10. Système selon l'une des revendications 4 à 9,
dans lequel l'unité de commande (150) est conçue pour calculer une valeur représentative de la précision, en particulier une variance ou un écart type, pour la direction préférée déterminée (M).

11. Système selon l'une des revendications 4 à 10,
dans lequel l'unité de commande (150) est conçue pour :
enregister la direction préférée déterminée (M) dans la carte ;
recharger la carte enregistrée incluant la direction préférée associée (M) à un moment ultérieur ; et
effectuer une auto-localisation globale du robot dans la carte, dans lequel la direction préférée (M) enregistrée dans la carte et une ou plusieurs mesures effectuées par la seconde unité de capteur (130) sont prises en compte.

12. Système selon l'une des revendications 4 à 11,
dans lequel l'unité de commande (150) est conçue pour :
recevoir une carte de la zone de déploiement de robot à partir d'un dispositif externe au moyen d'une unité de communication (140), dans lequel la carte reçue contient des informations sur une direction préférée ; et
déterminer l'orientation de la carte reçue par rapport à une carte créée par le robot sur la base de la direction préférée de la carte reçue et de la direction préférée déterminée.

13. Système selon la revendication 12,
dans lequel la direction préférée de la carte reçue et la direction préférée de la carte créée par le robot représentent chacune une direction cardinale attribuée à la carte.

14. Système selon la revendication 12 ou 13,
dans lequel l'unité de commande (150) est conçue pour :
transférer des informations de la carte reçue vers la carte créée par le robot, en particulier des informations concernant une division de la carte en sous-zones, des désignations pour les sous-zones, d'autres informations concernant les sous-zones.

15. Système selon l'une des revendications 4 à 14,
dans lequel le dispositif électronique est un autre robot (101) qui est conçu pour traiter la carte reçue du robot (100) en tenant compte de la direction préférée (M).

16. Système selon l'une des revendications 4 à 15,
dans lequel le dispositif électronique est conçu pour utiliser un capteur pour mesurer une variable de champ vectoriel physique, en particulier un champ magnétique, et pour déterminer sur cette base une orientation du dispositif électronique, et en particulier pour prendre en compte l'orientation spécifique du dispositif électronique lors de l'affichage et/ou du traitement de la carte.
